# EUROPÄISCHE PATENTSCHRIFT

(11) **EP 4 422 775 B1**
(45) Veröffentlichungstag und Bekanntmachung des Hinweises auf die Patenterteilung: **05.11.2025**
(21) Anmeldenummer: 22813107.4
(22) Anmeldetag: 26.10.2022
(51) Int. Cl.: B01D 45/12, B04C 5/13, F25B 41/00, F25B 43/00

(54) **ABSCHEIDEVORRICHTUNG, VERDICHTER MIT EINER ABSCHEIDEVORRICHTUNG UND KÄLTEANLAGE MIT EINER ABSCHEIDEVORRICHTUNG**
SEPARATOR, COMPRESSOR WITH A SEPARATOR AND REFRIGERATION SYSTEM WITH A SEPARATOR
DISPOSITIF DE SÉPARATION, COMPRESSEUR AVEC UN DISPOSITIF DE SÉPARATION ET INSTALLATION DE RÉFRIGÉRATION AVEC UN DISPOSITIF DE SÉPARATION

(30) Priorität: 26.10.2021 DE 102021127757
(43) Veröffentlichungstag der Anmeldung: 04.09.2024
(73) Patentinhaber: BITZER Kühlmaschinenbau GmbH, 71065 Sindelfingen (DE)
(72) Erfinder: BAUKNECHT, Jonas, 71032 Böblingen (DE); SECKER, Steffen, 71034 Böblingen (DE)
(74) Vertreter: Westphal, Mussgnug & Partner Patentanwälte mbB
(86) Internationale Anmeldenummer: PCT/EP2022/079934
(87) Internationale Veröffentlichungsnummer: WO 2023/073020

(56) Entgegenhaltungen:
- CN-A- 103 920 604
- DE-A1- 19 606 647
- US-A- 5 186 836
- US-A1- 2001 020 366
- US-B1- 6 331 196

## Beschreibung

Die vorliegende Erfindung betrifft eine Abscheidevorrichtung, insbesondere eine Schmiermittel-Abscheidevorrichtung, zum Abscheiden einer flüssigen Phase, insbesondere eines Schmiermittels, aus einem Gemisch mit einer gasförmigen Phase, insbesondere eines Kältemediums, mindestens eines Mediums, einen Verdichter, insbesondere einen Kältemittelverdichter, mit den Merkmalen des Patentanspruchs 13 und eine Kälteanlage mit den Merkmalen des Patentanspruchs 16.

Aus dem Stand der Technik ist eine Vielzahl von Vorrichtungen zum Abscheiden einer flüssigen Phase, insbesondere eines Schmiermediums, aus einem Gemisch mit einer gasförmigen Phase, insbesondere ein Kältemittel, mindestens eines Mediums vorbekannt. Derartige Vorrichtungen können beispielsweise in Kälteanlagen verwendet werden, um einen Anteil eines Schmiermediums aus dem Gemisch mit einem Kältemittel in einem Kältemittelkreislauf einer Kälteanlage stromab eines Verdichters oder Kompressors zu reduzieren.

Bewährt haben sich in der Vergangenheit Abscheidevorrichtungen in unterschiedlichen Bauformen, die auf verschiedenen Abscheidungsprinzipien beruhen. Eine verbreitete Bauform sind sogenannte Massenkraftabscheider, die beispielweise mittels Drahtgestricken bzw. Koaleszenz das zweite Medium abscheiden.

Vorrichtungen zum Abscheiden mit einem Massenkraftabscheider zwingen ein Gemisch aus der flüssigen Phase und der gasförmigen Phase mindestens eines Mediums durch ein Drahtgestrick. Der Bestandteil des mindestens einen Mediums in der flüssigen Phase haftet an dem Drahtgestrick an. Es formen sich größere Tropfen, welche durch die Schwerkraft nach unten über einen Auslass in einen Sumpf, auch Ölsumpf genannt, ablaufen können, während das gasförmige Medium am Ende des Drahtgestrickes mit reduziertem Anteil des mindestens einen Mediums in der flüssigen Phase wieder ausströmt.

Ein solcher Massenkraftabscheider ist beispielsweise aus der DE 19 845 993 A1 bekannt und hat sich in der Vergangenheit bewährt. Allerding sind mehrere Nachteile zu erwähnen. Massenkraftabscheider benötigen einen relativ großen Bauraum, damit das Gemisch ausreichend verzögert wird und niedrige Strömungsgeschwindigkeiten vorliegen. Es sind daher große Strömungsquerschnitte notwendig, um zu verhindern, dass flüssige Bestandteile des mindestens einen Mediums durch das Drahtgestrick durchgeschoben werden und von dem gasförmigen Bestandteil des mindestens einen Mediums mitgerissen werden.

Auch große Betriebsbereiche fordern derartige Abscheidevorrichtungen heraus, wobei nur mit erheblichem Aufwand ein vorgegebener maximaler Anteil des flüssigen Bestandteil des mindestens einen Mediums in dem gasförmigen Bestandteil des mindestens einen Mediums über den gesamten Betriebsbereich eingehalten werden kann. Die den Massenkraftabscheider aufnehmenden Gehäuse sind stark druckbelastet und somit massiv auszubilden, was einerseits zu einem erheblichen Gewicht führt und andererseits kostenintensiv ist.

Eine weitere aus dem Stand der Technik bekannte Bauform sind Zyklon-Abscheidevorrichtungen. Zyklon-Abscheidevorrichtungen sind sogenannte Fliehkraftabscheider und trennen das flüssige Medium unter Anwendung von Zentrifugalkräften in der Regel durch eine rotierende Strömung von dem gasförmigen Medium und weisen den Vorteil auf, dass eine zuverlässige Auslegung mit Hilfe von Auslegungsregeln möglich ist und dass ein höherer Abscheidegrad bei vergleichsweise kleinem Bauraum erreicht werden kann. Zyklon-Abscheidevorrichtungen verwenden typischerweise ein Gegenstromzyklon-Prinzip, wobei das Gemisch aus den flüssigen und gasförmigen Bestandteilen eine Richtungsänderung erfährt. Solche Zyklon-Abscheidevorrichtungen werden auch Gegenstrom-Zyklon-Abscheidevorrichtungen genannt. Der Einlass einer solchen Abscheidevorrichtung befindet sich in einem oberen Endbereich einer Zyklonkammer und das zweiphasige Gemisch strömt auf einem äußeren Durchmesser in einem äußeren Wirbel - auch Vortex genannt - in Richtung eines unteren Endbereichs. Anschließend erfolgt eine Richtungsumkehr im unteren Endbereich und das Gemisch strömt mit stetig sich verringerndem Anteil des flüssigen Bestandteils des mindestens einen Mediums innerhalb des inneren Wirbels in Richtung des oberen Endbereiches zurück und verlässt dort die Zyklonkammer über einen ersten Auslass. Das abgeschiedene flüssige Bestandteil strömt in dem unteren Endbereich der Zyklonkammer aus.

Als Nachteil solcher Gegenstrom-Zyklon-Abscheidevorrichtungen ist zu nennen, dass diese gegenüber den erstgenannten Abscheidevorrichtungen mit Drahtgestricken in etwa gleichviel Bauraum benötigen. Durch die Strömungsumkehr können sich zusätzliche druckverlustbehaftete Wirbel bilden, und es kann ein bereits abgeschiedener Bestandteil der flüssigen Phase mindestens eines Mediums wieder mitgerissen werden. Auch können sich Decken- oder Kurzschlussströmungen bilden.

Weiterhin sind aus dem Stand der Technik Gleichstrom-Zyklon-Abscheidevorrichtungen bekannt, wobei das mindestens eine zweiphasige Gemisch mit einem Drall in einen ersten Endbereich einer horizontal angeordneten Zyklonkammer zugeführt wird. Auf der in der Zyklonkammer gegenüberliegenden Seite verlässt der gasförmige Bestandteil in dem zweiten Endbereich mit reduziertem festem und/oder flüssigem Bestandteil des mindestens einen Mediums die Zyklonkammer. Durch die Zentrifugalkräfte setzt sich das flüssige und/oder feste Bestandteil an der Wandung der Zyklonkammer ab und kann über einen horizontal angeordneten zweiten Ablauf abfließen. Beispielsweise ist eine solche Vorrichtung aus der US 10 825 590 B2 bekannt.

Als Nachteil dieser Gleichstrom-Zyklon-Abscheidevorrichtungen ist zu nennen, dass ein Abscheidegrad bzw. der verbleibende Anteil des flüssigen und/oder festen Bestandteils des mindestens einen Mediums stark von dem thermodynamischen Zustand des Verdichters oder Kompressors abhängig ist. Hauptursache für das nicht zufriedenstellende Teillastverhalten ist, dass mit sinkendem Volumenstrom die Rotationsgeschwindigkeit des Zyklons abfällt, wodurch die Abscheideeffizienz mit dem Volumenstrom sinkt. Weiterhin nachteilig ist an dieser Bauform eine ungenügende Bauraumausnutzung.

Weiteren Stand der Technik bilden die US 2001 020366 A1 und die US 5 186 836.

Hier setzt die vorliegende Erfindung an.

Ausgehend von diesem Stand der Technik stellt sich die vorliegende Erfindung der Aufgabe, eine verbesserte Abscheidevorrichtung bereitzustellen, die in zweckmäßiger Weise die aus dem Stand der Technik bekannten Nachteile nicht aufweist. Die Abscheidevorrichtung soll einerseits effizient den verfügbaren Bauraum nutzen und andererseits über große Betriebsbereiche eine hohe Abscheideeffizienz aufweisen.

Diese Aufgaben werden durch eine Abscheidevorrichtung mit den Merkmalen des Patentanspruchs 1, durch einen Verdichter, insbesondere einen Kältemittelverdichter, mit den Merkmalen des Patentanspruchs 13 und durch eine Kälteanlage mit den Merkmalen des Patentanspruchs 16 gelöst.

Weitere vorteilhafte Ausgestaltungen werden in den Unteransprüchen angegeben.

Die erfindungsgemäße Abscheidevorrichtung, insbesondere die erfindungsgemäße Schmiermedium-Abscheidevorrichtung, mit den Merkmalen des Patentanspruchs 1 zum Abscheiden einer flüssigen Phase aus einem Gemisch mit einer gasförmigen Phase mindestens eines Mediums weist ein eine Zyklonkammer bildendes Gehäuse auf, welches entlang einer im Wesentlichen vertikal orientierten Mittelachse angeordnet ist und auf gegenüberliegenden Seiten in Bezug auf die Mittelachse einen oberen Endbereich und einen unteren Endbereich aufweist. Darüber hinaus weist die erfindungsgemäße Abscheidevorrichtung ein Tauchrohr und Strömungsführungsmittel zur Bildung eines Zyklons in der Zyklonkammer um die Mittelachse auf, wobei im oberen Endbereich des Gehäuses ein Einlass in die Zyklonkammer für das, insbesondere zweiphasige, Gemisch vorgesehen ist und im unteren Endbereich des Gehäuses ein erster Auslass für die flüssige Phase des mindestens einen Mediums und ein zweiter Auslass für die aus dem Gemisch abgeschiedene flüssige Phase des mindesten einen Mediums vorgesehen sind. Ferner ist vorgesehen, dass das Tauchrohr von dem unteren Endbereich in der Mittelachse orientiert in die Zyklonkammer ragt und mit dem ersten Auslass verbunden ist, und dass zwischen dem Gehäuse und dem Tauchrohr eine Senke ausgebildet ist, wobei die Senke in dem unteren Endbereich der Zyklonkammer angeordnet ist und das abgeschiedene mindestens eine Medium in der flüssigen Phase aus der Senke, insbesondere über einen Senkenboden der Senke, in den zweiten Auslass abfließen kann.

Die Senke ist ein umlaufender nach oben offener Raum, der das Tauchrohr umgibt. Bevorzugt ist die Senke ringförmig ausgebildet und/oder koaxial zu dem Tauchrohr angeordnet. Sowohl der erste Auslass als auch der zweite Auslass sind bevorzugt durch den Boden des Gehäuses in dem unteren Endbereich geführt. Weiter bevorzugt sind der erste Auslass und der zweite Auslass parallel zu der Mittelachse orientiert und getrennt voneinander in dem unteren Endbereich des Gehäuses, insbesondere in dem Boden, angeordnet. Der erste Auslass kann eine Auslassleitung umfassen, durch die der Bestandteil des mindestens einen Mediums in der gasförmigen Phase mit verringertem Anteil des mindestens einen Mediums in der flüssigen Phase zur weiteren Verwendung abgeführt werden kann. Die Hauptstromrichtungen in der Senke und/oder in dem Tauchrohr sind vorzugsweise im Wesentlichen parallel zu der Mittelachse.

Die Mittelachse ist, insbesondere im bestimmungsgemäßen Gebrauch, im Wesentlichen vertikal orientiert, wobei hier und im Nachfolgenden unter dieser Orientierung der Mittelachse eine Ausrichtung von ±20°, weiter bevorzugt ±15°, noch weiter bevorzugt ±10° und am meisten bevorzugt von ±5° in Bezug auf den Kraftvektor der Schwerkraft verstanden wird. Der obere Endbereich liegt somit in der Mittelachse über dem unteren Endbereich und weist eine größere Höhenlage auf als der untere Endbereich. Unter Radial wird im Zusammenhang mit dieser Erfindung eine geradlinige Richtungsangabe, ausgehend von der Mittelachse, verstanden.

Die vorliegende Erfindung beruht auf der Idee, eine Abscheidevorrichtung vorzuschlagen, die eine kompakte Bauweise, eine Gewichtsreduktion und Kostenreduktion ermöglicht und eine hohe Abscheideeffizienz auch im Teillastbereich, beispielsweise bei einem Nennmassenstrom von ca. 25% vom Auslegungsmassenstrom, aufweist. Dadurch, dass die Mittelachse im Wesentlichen vertikal orientiert ist, kann eine hohe Abscheideeffizienz, insbesondere im Teillastbereich erreicht werden. Eine Tropfenbildung des mindestens einen Mediums in der flüssigen Phase kann an einer Innenwand des Gehäuses erfolgen, wobei die Tropfen schwerkraftbedingt an dem Gehäuse in die Senke ablaufen können, ohne dass Teilchen erneut durch das mindestens eine Medium in der gasförmigen Phase zum Tauchrohr und zum ersten Auslass mitgerissen werden können. Im Teillastbereich ist die Verweildauer des, vorzugsweise zweiphasigen, Gemisches aufgrund niedriger Strömungsgeschwindigkeiten in der Zyklonkammer länger, wobei zusätzlich die Schwerkraft begünstigend auf die Partikel der flüssigen Phase des mindestens einen Mediums einwirkt und diese in die Senke treibt. Die Abscheidevorrichtung kann aufgrund der bestimmungsgemäßen Ausrichtung und dem Arbeitsprinzip auch als Vertikal-Gleichstrom-Zyklon-Abscheidevorrichtung bezeichnet werden.

An dieser Stelle wird angemerkt, dass das zweiphasige Gemisch ein Gemisch aus einem Medium, beispielsweise ein Kältemedium, insbesondere R134a, sein kann, das sowohl in dem flüssigen als auch in dem gasförmigen Aggregatzustand vorhanden ist. Auch kann das Gemisch aus einem ersten Medium in einer gasförmigen Phase bzw. gasförmigen Aggregatzustand und einem mindestens zweiten (anderen) Medium in einer anderen Phase als der gasförmigen Phase bestehen. Die andere Phase als die gasförmige Phase kann die flüssige und/oder feste Phase bzw. der flüssige und/oder feste Aggregatzustand sein, wobei im Zusammenhang mit der vorliegenden Erfindung ausschließlich von der flüssigen Phase bzw. dem flüssigen Aggregatzustand geschrieben wird, jedoch darunter die flüssige und/oder feste Phase bzw. der flüssige und/oder feste Aggregatzustand verstanden werden kann.

Das erste Medium kann beispielsweise ein Kältemedium, insbesondere R134a, sein und das mindestens eine zweite Medium kann ein Schmiermedium, beispielsweise Öl sein.

Eine vorteilhafte Weiterbildung der vorliegenden Erfindung sieht vor, dass die Zyklonkammer einen kreisrunden Querschnitt aufweist. Der kreisrunde Querschnitt der Zyklonkammer begünstigt die Strömungsverhältnisse in der Zyklonkammer und trägt zur Verbesserung einer Gesamteffizienz beispielsweise einer Kälteanlage oder eines Verdichters mit einer solchen Abscheidevorrichtung aufgrund niedriger Druckverluste bei.

Eine Weiterbildung der vorliegenden Erfindung sieht vor, dass die Strömungsführungsmittel durch den Einlass gebildet sind, wobei der Einlass das zweiphasige Gemisch aus der flüssigen und gasförmigen Phase des mindestens einen Mediums in Bezug auf die Mittelachse tangential oder sekantial der Zyklonkammer zuführt. Der Einlass mündet gemäß dieser bevorzugten Weiterbildung in dem oberen Endbereich bevorzugt bündig an einer Wandung in die Zyklonkammer, wodurch auf die Verwendung von Leitblechen, Leitschaufeln oder dergleichen zur Erzeugung eines Dralls mit einer Rotation um die Mittelachse verzichtet werden kann. Dadurch kann eine Baulänge in der Mittelachse der Abscheidevorrichtung möglichst klein gehalten werden und eine effizientere Nutzung des vorhandenen Bauraums kann erreicht werden. Angemerkt wird, dass auch mehrere Einlässe vorgesehen sein können, die vorzugsweise um die Mittelachse symmetrisch verteilt angeordnet sind.

Darüber hinaus kann nach Maßgabe einer Weiterbildung der vorliegenden Erfindung der Einlass ausgebildet sein, das Gemisch im Wesentlichen senkrecht zu der Mittelachse orientiert in die Zyklonkammer einzuströmen. Hierzu kann der Einlass eine Zuführleitung umfassen. Die Zuführleitung kann durch ihre Orientierung, die im Wesentlichen senkrecht zu der Mittelachse der Zyklonkammer angeordnet ist, die Richtung des einströmenden Gemischs vorgeben. Somit kann in bevorzugter Weise das Gemisch aus der gasförmigen und flüssigen Phase des mindestens einen Mediums durch den Einlass im Wesentlichen senkrecht zu der Mittelachse einströmen und durch den ersten Auslass und den zweiten Auslass können die flüssigen und gasförmigen Bestandteile des mindestens einen Mediums getrennt voneinander parallel zu der Mittelachse ausströmen.

Auch hat es sich als vorteilhaft erwiesen, wenn der Einlass im Wesentlichen im Querschnitt rechteckig- oder polygonförmig ist.

Gemäß einer bevorzugten Weiterbildung der vorliegenden Erfindung weist der Einlass Mittel zum Einstellen eines Strömungsquerschnittes auf. Durch die Mittel zum Einstellen des Strömungsquerschnitts kann die Geschwindigkeit des in die Zyklonkammer einströmenden, insbesondere zweiphasigen, Gemischs eingestellt werden, wodurch insbesondere eine Rotationsgeschwindigkeit des Wirbels in der Zyklonkammer eingestellt werden kann. Damit kann vorzugsweise betriebspunktabhängig eine optimale Abscheideeffizienz des flüssigen Bestandteils aus dem gasförmigen Bestandteil des mindestens einen Mediums erreicht werden.

Beispielsweise können die Mittel zum Einstellen des Strömungsquerschnitts im Teillastbereich, also bei einem geringen Massenstrom, den Strömungsquerschnitt reduzieren. Es ist vorstellbar, dass die Mittel zum Einstellen des Strömungsquerschnitts als schwenkbare Klappe, bewegliche Drossel oder Lamellenblende ausgebildet sein können. Vorzugsweise kann durch die Mittel zum Einstellen des Strömungsquerschnitts eine Höhe und/oder eine Breite des Einlasses geändert werden, wobei weiter bevorzugt die Mittel zum Einstellen des Strömungsquerschnitts eine Verlagerung des in die Zyklonkammer eintretenden, insbesondere zweiphasigen, Gemisches in Richtung des oberen Endbereichs und/oder der Wandung der Zyklonkammer bewirken. Einerseits verhindert dies ungünstige Rückströmungen mit Sekundärwirbeln und andererseits nachteilige Druckverluste.

Eine Weiterbildung der vorliegenden Erfindung sieht vor, dass in dem oberen Endbereich die Zyklonkammer durch eine Kammerdecke geschlossen ist. Der Einlass kann vorteilhafter Weise bündig zu der Kammerdecke in der Zyklonkammer münden, wodurch das eintretende Gemisch beim Eintreten in die Zyklonkammer sowohl von der Innenwandung des Gehäuses als auch von der Kammerdecke geführt wird.

Gemäß einer bevorzugten Weiterbildung der vorliegenden Erfindung ist die Kammerdecke ausgehend von dem Einlass in Richtung des unteren Endbereichs abfallend ausgebildet, wobei besonders bevorzugt die Kammerdecke ausgehend von dem Einlass in Richtung des unteren Endbereichs um die Mittelachse umlaufend abfallend ist. Die Kammerdecke kann folglich als Wendel ausgebildet sein, wobei die Wendel bevorzugt annähernd einmal um die Mittelachse umlaufend ausgebildet ist, weiter bevorzugt sich jedoch nicht über den Einlass erstreckt. Die Steigung der Wendel entspricht bevorzugt einer Höhe des Einlasses, wobei die Höhe in Bezug auf die Mittelachse gemessen wird. Durch die abfallende Kammerdecke wird die Zyklonbildung in der Zyklonkammer unterstützt, wodurch auch im Teillastbereich eine hohe Abscheideeffizienz erreicht werden kann.

Die Erfindung sieht vor, dass ein Kern vorgesehen ist, und dass der Kern in der Mittelachse von dem oberen Endbereich, insbesondere von der Kammerdecke ausgehend, in die Zyklonkammer ragt. Der Kern kann bevorzugt koaxial zu der Mittelachse angeordnet sein und weiter bevorzugt rotationssymmetrisch um die Mittelachse ausgeformt sein. Ferner ist es bevorzugt, wenn sich der Kern in der Mittelachse mindestens über die Höhe des Einlasses erstreckt. Der Kern kann weiterhin ein freies Ende aufweisen, welches freischwebend in der Zyklonkammer angeordnet ist und bevorzugt in der Mittelachse zwischen dem Einlass und beabstandet zu dem Tauchrohr positioniert ist. Der Kern ist konfiguriert, das bevorzugt zweiphasige, Gemisch in der Zyklonkammer radial nach außen - also von der Mittelachse in radialer Richtung - zu verlagern. Dadurch wird die Zyklonströmung beschleunigt und die Partikel des mindestens einen Mediums in der flüssigen Phase werden aufgrund der Zentrifugalkräfte abgeschieden. Darüber hinaus wird durch den Kern der Einfluss von den im Eintrittsbereich bzw. im Zyklon-Bereich über dem Kern auftretenden Sekundärströmungen reduziert. Im einfachsten Fall kann der Kern ein Stab, insbesondere ein zylindrischer Stab mit einem bevorzugt konstanten Querschnitt, sein.

Gemäß der vorliegenden Erfindung umfasst der Kern einen Kopf, wobei der Kopf bevorzugt im Bereich des freien Endes angeordnet ist. Der Kopf weist eine größere Querschnittsfläche als der Kern auf, wodurch lokal der durchströmbare Querschnitt in der Zyklonkammer reduziert wird. Dadurch wird das, insbesondere zweiphasige, Gemisch aus einer flüssigen Phase und einer gasförmigen Phase mindestens eines Mediums bzw. die Zyklonströmung beschleunigt und die Abscheiderate der flüssigen Phase des mindestens einen Mediums steigt aufgrund größerer Zentrifugalkräfte. Bevorzugt sind der Kopf und das Tauchrohr koaxial, insbesondere in der Mittelachse, angeordnet.

Gemäß einer Weiterbildung weist der Kopf eine Querschnittsfläche auf, wobei die Querschnittsfläche des Kopfes größer ist, als eine Querschnittsfläche des Tauchrohrs. Beispielsweise können bzw. kann der Kopf und/oder das Tauchrohr einen rotationssymmetrischen Querschnitt aufweisen. In diesem Fall ist ein Außendurchmesser des Kopfes größer als ein Außendurchmesser des Tauchrohrs. Die Querschnittsfläche des Kopfes sollte derart dimensioniert sein, dass in einer Projektion in der Mittelachse der Kopf das freie Ende des Tauchrohrs vollständig überdeckt.

Weiterhin hat es sich als vorteilhaft erwiesen, wenn der Kopf einen Kragen umfasst. Der Kragen steht bevorzugt schirmartig und noch weiter bevorzugt in Richtung des unteren Endbereiches geneigt ab. Endseitig kann eine Abtropfkante ausbildet sein, an der möglicherweise sich ablagernde flüssige Bestandteile des mindestens einen Mediums abtropfen können. Der Kragen ist vorzugsweise derart ausgebildet, dass das abtropfende mindestens eine Medium in der flüssigen Phase nicht in das Tauchrohr fallen, gelangen bzw. tropfen kann.

Nach Maßgabe einer bevorzugten Weiterbildung der vorliegenden Erfindung ist der Kern schwingfähig ausgebildet und/oder weist zumindest bereichsweise einen schwingfähigen Überzug auf. Insbesondere kann der Kern durch Schwingungen des Verdichters bzw. Kältemittelverdichters zum Schwingen angeregt werden, wobei die Schwingungen Anhaftungen der flüssigen Phase des mindestens einen Mediums auf der Oberfläche verhindern sollen. Somit kann das mindestens eine Medium in der flüssigen Phase von der Strömung in der Zyklonkammer besser mitgerissen werden.

Eine bevorzugte Weiterbildung der Abscheidevorrichtung sieht vor, dass der Kopf eine aerodynamische Form aufweist, wodurch eine aerodynamisch günstige Strömungsführung erreicht werden kann. Beispielsweise kann der Kopf torpedoförmig ausgestaltet sein. Bevorzugt kann das freie Ende des Kerns kegelförmig ausgeformt sein oder eine an eine Ellipse angenäherte zulaufende Form aufweisen. Dadurch kann direkt Einfluss auf das Strömungsverhalten in der Zyklonkammer genommen werden.

Eine Weiterbildung der vorliegenden Erfindung sieht vor, dass in der Senke mindestens eine Drossel angeordnet ist. Die mindestens eine Drossel ist bevorzugt als ein Flansch ausgebildet, der entweder von dem Tauchrohr und/oder dem Gehäuse bevorzugt in radialer Richtung in die Senke ragt und den durchströmten Querschnitt in der Senke verkleinert. Die Drossel kann eine Reduzierung des Druckes in der Senke erwirken, wodurch einerseits der Druck in dem zweiten Auslass und andererseits Rückströmungen aus der Senke in Richtung der Zyklonkammer bzw. des Tauchrohrs reduziert werden. Bevorzugt steht jedoch die Drossel von dem Gehäuse ab, da im Bereich des Gehäuses, also an den großen Durchmessern, der vorherrschende Druck am höchsten ist. Die Drossel kann in einer Radialrichtung - bezogen auf die Mittelachse - in die im Querschnitt ringförmige Senke zwischen 30% bis 95% einer relativen Kanalhöhe ragen. Die Drossel kann geneigt ausgebildet sein, damit insbesondere von der dem oberen Endbereich zugewandten Seite abgeschiedenes zweites Medium ablaufen kann.

Weiterhin hat es sich als vorteilhaft erwiesen, wenn das Tauchrohr mindestens einen Tauchrohrkragen aufweist. Der Tauchrohrkragen steht gemäß einer bevorzugten Ausgestaltung schirmartig und geneigt in Richtung des unteren Endbereiches bzw. des Senkenbodens von dem Tauchrohr ab. Endseitig ist eine Abtropfkante ausbildet, die sich an dem Tauchrohr ausbildende Rückströmungen (in Richtung des oberen Endbereichs) umlenkt und verhindert. Dadurch wird verhindert, dass bereits abgeschiedenes Medium in der flüssigen Phase durch die Rückströmung mitgerissen werden kann. An der Abtropfkante kann das mindestens eine Medium in der flüssigen Phase erneut in Richtung des Senkenbodens abtropfen. Der Tauchrohrkragen ragt in einer Radialrichtung gemäß einer bevorzugten Weiterbildung in die Senke zwischen ca. 5% bis 25% einer relativen Kanalhöhe.

Weiterbildungsgemäß hat es sich als besonders vorteilhaft erwiesen, wenn die Drossel in der Längsachse zwischen dem unteren Endbereich und dem Tauchrohrkragen angeordnet ist. Dadurch können Rückströmungen effektiv verringert werden und ein Mitreißen bzw. ein Wiedereintritt von bereits abgeschiedenem zweiten Medium kann verhindert werden.

Weiterhin hat es sich als vorteilhaft erwiesen, wenn der zweite Auslass einen Sammelbehälter umfasst. In dem Sammelbehälter kann die in der Zyklonkammer abgeschiedene und in der Senke gesammelte flüssigen Phase des mindestens einen Mediums, insbesondere zur Versorgung des Verdichters, gesammelt und bevorratet werden und beispielsweise zur Schmierung des Verdichters verwendet werden. Der Sammelbehälter kann druckdicht sein, um einer Druckbeaufschlagung Stand zu halten.

Eine Weiterbildung der Erfindung sieht vor, dass der erste Auslass zweite Strömungsführungsmittel zum Entdrallen der Strömung umfasst. Die zweiten Strömungsführungsmittel können im Übergang zwischen dem Tauchrohr und der Auslassleitung als eine tangentiale bzw. sekantiale Ausleitung ausgeführt sein. Durch die zweiten Strömungsführungsmittel kann der dynamische Druck, der insbesondere im Tauchrohr stark rotierenden Strömung, zurückgewonnen werden und die Strömung ist nach der tangentialen Ausleitung in der Auslassleitung axial ausgerichtet und entdrallt.

Darüber hinaus kann ein Bypass vorgesehen sein, wobei der Bypass den ersten Auslass mit dem zweiten Auslass verbindet. Der Bypass umfasst eine druckdichte Leitung, die eine Verbindung zwischen dem ersten Auslass und dem zweiten Auslass unter Umgehung der Zyklonkammer bereitstellt. Bevorzugt mündet der Bypass in der Auslassleitung des ersten Auslasses. Durch den Bypass werden vorzugsweise 10% oder weniger des Nettomassenstroms des Mediums in der gasförmigen Phase geleitet, wodurch die zuvor beschriebenen Rückströmungen aus der Senke vermieden werden. Der abgeschiedene Bestandteil der flüssigen Phase des mindestens einen Mediums wird durch die sich einstellende Strömung von dem Medium in der gasförmigen Phase aus dem zweiten Auslass mitgenommen bzw. abgesaugt. Bevorzugt zweigt der Bypass von dem Sammelbehälter ab. Genauer gesagt kann der Bypass an einer Auslassöffnung von dem Sammelbehälter abzweigen, die oberhalb eines Pegels der flüssigen Phase des mindestens einen Mediums in dem Sammelbehälter angeordnet ist. In dem Sammelbehälter kann eine Verzögerung der Strömungsgeschwindigkeit erfolgen und verbleibende Partikel der flüssigen Phase des mindestens einen Mediums können abgeschieden werden. Von dem Sammelbehälter bzw. der Auslassöffnung des Sammelbehälters strömt der gasförmige Bestandteil des mindestens einen Mediums über den ersten Bypass zum ersten Auslass bzw. in der Auslassleitung des ersten Auslasses. Es hat sich gezeigt, dass durch den ersten Bypass die Abscheideeffizienz erheblich gesteigert und der Anteil des mindestens einen Mediums in der flüssigen Phase somit reduziert werden kann.

Gemäß einer Weiterbildung der Abscheidevorrichtung kann ferner mindestens ein zweites Tauchrohr vorgesehen werden, dass in der Zyklonkammer innerhalb des Tauchrohrs angeordnet ist. Das mindestens eine zweite Tauchrohr ist innerhalb des Tauchrohrs in der Mittelachse zurückversetzt angeordnet. Mit anderen Worten überragt das Tauchrohr das mindestens eine zweite Tauchrohr in der Mittelachse in Richtung des oberen Endbereiches. Das mindestens eine zweite Tauchrohr bildet zwischen dem Tauchrohr und dem mindestens einen zweiten Tauchrohr mindestens eine zweite Senke, die mit mindestens einem weiteren Auslass verbunden sein kann. Das mindestens eine zweite Tauchrohr bildet in dem Tauchrohr eine weitere Abscheidestufe, wodurch die Abscheideeffizienz weiter gesteigert werden kann.

Der weitere Auslass kann gemäß einer Weiterbildung über einen weiteren Bypass mit dem ersten Auslass verbunden sein. Weiterhin ist es möglich, dass der weitere Auslass einen weiteren Sammelbehälter umfasst.

An dieser Stelle wird angemerkt, dass eine beliebige Anzahl von Abscheidestufen vorgesehen werden kann, wobei jede **Ab**scheidestufe ein Tauchrohr, eine Senke und einen entsprechenden Auslass umfassen kann.

Weiterhin kann es vorteilhaft sein, wenn mindestens eine Tropfenvergrößerungseinrichtung vorgesehen ist. Die mindestens eine Tropfenvergrößerungseinrichtung ist stromauf des Einlasses angeordnet und konfiguriert, die Tropfgröße der flüssigen Phase des mindestens einen Mediums in dem zweiphasigen Gemisch zu vergrößern. Die mindestens eine Tropfenvergrößerungseinrichtung kann beispielsweise und nicht abschließend aufgezählt ein Drahtgestrick, ein poröses Medium, Prallbleche, Prallelemente, eine Zentrifuge, Lamellen, scharfkantige Umlenkungen und/oder Rohrbögen sein. Durch die Tropfenvergrößerungseinrichtung wird die Partikelgröße des mindestens einen Mediums in der flüssigen Phase vor dem Eintritt in die Zyklonkammer vergrößert, wodurch das mindestens eine Medium in der flüssigen Phase in der Zyklonkammer verbessert abgeschieden werden kann.

Ein weiter Aspekt der vorliegenden Erfindung betrifft einen Verdichter, insbesondere einen Kältemittelverdichter, mit einer zuvor beschriebenen Abscheidevorrichtung zum Abscheiden einer flüssigen Phase aus einem Gemisch mit einer gasförmigen Phase mindestens eines Mediums. Die Abscheidevorrichtung kann entweder unmittelbar an dem Verdichter angeordnet sein, oder in einem Kältemittelkreislauf einer Kälteanlage unabhängig von dem Verdichter betrieben werden. Vorzugsweise ist die Abscheidevorrichtung dem Verdichtungsprozess nachgeschaltet.

Darüber hinaus hat es sich als vorteilhaft erwiesen, wenn der Verdichter ein Schraubenverdichter ist. Bevorzugt weist der Schraubenverdichter zwei in einer Ebene vertikal übereinander in einer Läuferachse angeordnete Läufer auf, wobei weiter bevorzugt die Mittelachse der Abscheidevorrichtung parallel und beabstandet zu der Ebene der Läuferachsen angeordnet ist.

Es kann vorteilhaft sein, wenn die abgeschiedene flüssige Phase des mindestens einen Mediums, vorzugsweise eines Schmiermediums, dem Verdichter zugeführt bzw. an den Verdichter zurückgeleitet wird. Der Verdichter kann einen Sumpf für das mindestens eine Medium in der flüssigen Phase aufweisen, wobei der Sumpf durch den ersten Sammelbehälter und/oder den zweiten Sammelbehälter gebildet wird. Der erste Bypass und/oder der zweite Bypass können bzw. kann somit eine Verbindung zwischen dem Sumpf des Verdichters und dem ersten Auslass der Abscheidevorrichtung herstellen.

Eine Weiterbildung sieht vor, dass ein Pulsationsdämpfer vorgesehen ist. Der Pulsationsdämpfer ist vorzugsweise zwischen einem Auslass des Verdichters und der Abscheidevorrichtung angeordnet. Allerdings kann der Pulsationsdämpfer auch stromab der Abscheidevorrichtung angeordnet sein.

Ein weiterer Aspekt der vorliegenden Erfindung betrifft eine Kälteanlage mit mindestens einer zuvor beschriebenen Abscheidevorrichtung. Ferner kann die Kälteanlage mindestens einen, vorzugsweise mindestens zwei Wärmeübertrager und ein Expansionsorgan aufweisen. Solche Kälteanlagen können in Kälte-, Klima-, Wärmepumpen-, Prozesskühlungsanlagen zur Anwendung kommen.

Eine bevorzugte Weiterbildung sieht vor, dass zwischen dem Expansionsorgan und dem mindestens einen Wärmeübertrager die mindestens eine Abscheidevorrichtung angeordnet ist. Bevorzugt ist die mindestens eine Abscheidevorrichtung stromab des Expansionsorgans und stromauf des mindestens einen Wärmeübertragers angeordnet. Die mindestens eine Abscheidevorrichtung scheidet somit vor dem als Verdampfer wirkenden Wärmeübertrager die flüssige Phase von der gasförmigen Phase des mindestens einen Mediums und die abgeschiedene flüssige Phase des mindestens einen Mediums wird an den als Verdampfer wirkenden Wärmeübertrager weitergeleitet.

Weiterhin kann es vorteilhaft sein, wenn die gasförmige Phase des mindestens einen Mediums von der mindestens einen Abscheidevorrichtung ganz oder teilweise an dem mindestens einen als Verdampfer wirkenden Wärmeübertrager vorbeigeleitet wird.

Auch kann es vorteilhaft sein, wenn die gasförmige Phase des mindestens einen Mediums ganz oder teilweise von der mindestens einen Abscheidevorrichtung in den mindestens einen als Verdampfer wirkenden Wärmeübertrager ausgestoßen wird, wobei bevorzugt die gasförmige Phase des mindestens einen Mediums ganz oder teilweise in einem Deckenbereich des mindestens einen Wärmeübertrages ausgestoßen wird, wodurch die Tropfenverteilung auf Wärmeübertragerrohre in dem mindestens einen Wärmeübertrag nicht so stark beeinflusst wird.

Weiterhin kann die Kälteanlage einen Verdichter mit einer Abscheidevorrichtung umfassen.

Nachfolgend werden unter Bezugnahme auf die begleitenden Zeichnungen mehrere Ausführungsbeispiele einer erfindungsgemäßen Abscheidevorrichtung zum Abscheiden einer flüssigen Phase aus einem Gemisch mit einer gasförmigen Phase mindestens eines Mediums im Detail beschrieben. Es zeigen:
- Figur 1: eine schematische und stark vereinfachte erste Ausführung einer Kälteanlage mit einem Kältekreislauf mit zwei Wärmeübertragern, einem Verdichter, einer erfindungsgemäßen Abscheidevorrichtung und einem Expansionsorgan,
- Figur 2: die Kälteanlage gemäß Figur 1, wobei die Abscheidevorrichtung detailliert dargestellt ist,
- Figur 3: eine vergrößerte Darstellung der Abscheidevorrichtung gemäß Figur 2 mit einer Zyklonkammer mit einem Einlass, Strömungsführungsmittel und zwei Auslässen,
- Figur 4a: eine Schnittdarstellung der Abscheidevorrichtung gemäß der Schnittlinie A - gemäß Figur 3,
- Figur 4b: eine Schnittdarstellung des ersten Auslasses der Abscheidevorrichtung gemäß Figur 3,
- Figur 5: eine perspektivische Darstellung des Verdichters mit einer Abscheidevorrichtung gemäß den Figuren 2 und 3 in einer Druckglocke eines Verdichters,
- Figur 6: eine Darstellung des Verdichters mit einer Abscheidevorrichtung gemäß den Figuren 2 und 3, wobei die Abscheidevorrichtung an dem Verdichtergehäuse angeordnet ist,
- Figur 7: eine Schnittdarstellung des Verdichters mit einer Abscheidevorrichtung gemäß Figur 6,
- Figur 8: ein zweites Ausführungsbeispiel der Abscheidevorrichtung mit einer durch einen Bypass erzeugten Absaugung,
- Figur 9: eine perspektivische Darstellung des Verdichters mit einer Abscheidevorrichtung gemäß Figur 8,
- Figur 10: eine Schnittdarstellung des Verdichters mit einer Abscheidevorrichtung gemäß Figur 8,
- Figur 11: ein drittes Ausführungsbeispiel der Abscheidevorrichtung mit einer zweiten Abscheidestufe, und
- Figur 12: eine erste Weiterbildung der Kälteanlage gemäß Figur 1, wobei die Abscheidevorrichtung zwischen dem Expansionsorgan und einem als Verdampfer verwendeten Wärmeübertrager angeordnet ist, und
- Figur 13: eine zweite Weiterbildung der Kälteanlage gemäß der-Figuren 1 und 12.

Gleiche oder funktional gleiche Bauteile werden mit den gleichen Bezugszeichen gekennzeichnet. Darüber hinaus sind in den Figuren nicht alle gleichen oder funktional gleichen Bauteile mit einer Bezugsziffer versehen.

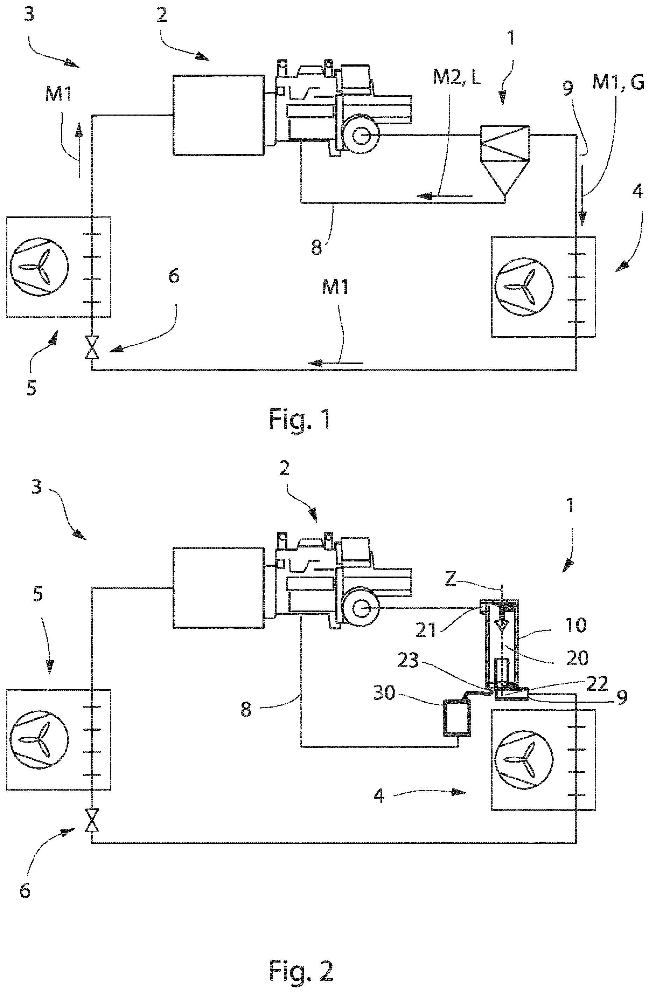

Figur 1 zeigt eine Kälteanlage, aufweisend einen Kältekreislauf 3, einen als Kältemittelverdichter 2 ausgebildeten Verdichter, eine Abscheidevorrichtung 1, zwei Wärmeübertrager 4, 5 und ein Expansionsorgan 6. Ein Gemisch aus einer gasförmigen Phase und einer flüssigen Phase mindestens eines Mediums M kommt von dem Kältemittelverdichter 2 und wird zunächst zu der Abscheidevorrichtung 1 geleitet, um einen Anteil der flüssigen Phase L in dem Gemisch zu reduzieren und mindestens die flüssige Phase L von der gasförmigen Phase G des mindestens einen Mediums M abzuscheiden.

Die Abscheidevorrichtung 1 kann wie nachfolgend erläutert wird zum Abscheiden der flüssigen Phase eines zweiten Mediums M2, beispielsweise eins Schmiermediums, aus einem Gemisch mit einer flüssigen Phase eines ersten Mediums M1, beispielsweise eines Kältemediums, verwendet werden.

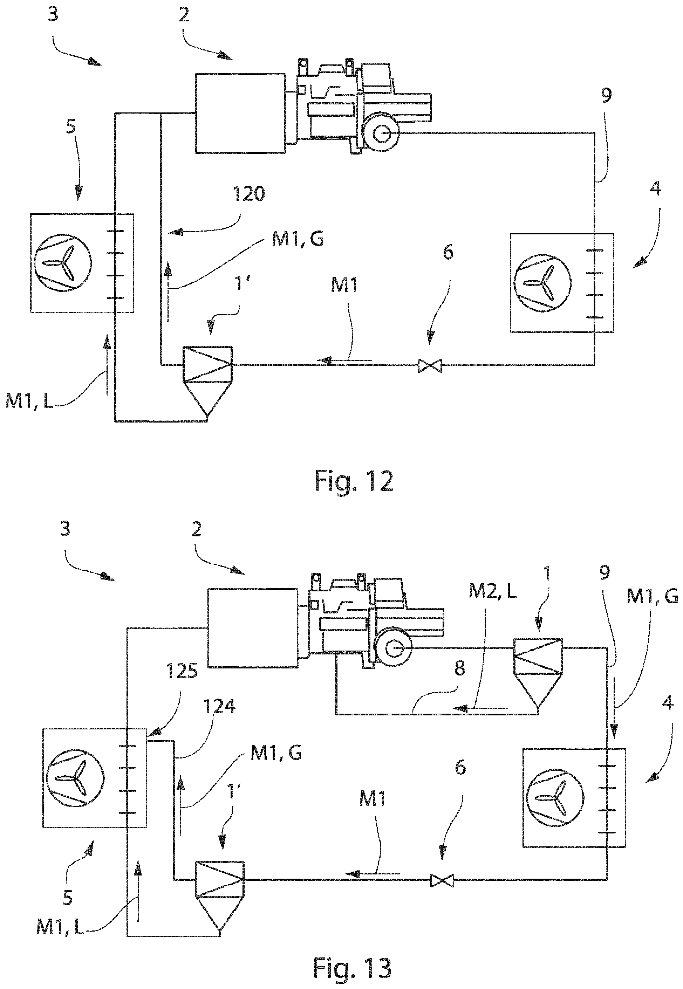

Es wird der Vollständigkeit halber angemerkt, dass das erste Medium M1 und das zweite Medium M2 das gleiche Medium sein können, jedoch das erste Mediums M1 und das zweite Medium M2 in dem Gemisch unterschiedliche Aggregatzustände aufweisen können. Die Abscheidevorrichtung gemäß den Figuren 12 und 13, dort zum besseren Verständnis mit dem Bezugszeichen 1' gekennzeichnet, scheidet die flüssige Phase L eines Mediums aus einem zweiphasigen Gemisch des Mediums mit einer flüssigen Phase des Mediums ab. Das Medium dort kann beispielsweise ein Kältemedium, insbesondere R134a, sein.

Zum besseren Verständnis sind in den Figuren 1, 12, 13 mittels Peillinien die Strömungsrichtungen angedeutet.

Figur 1 zeigt, dass die flüssige Phase L des zweiten Mediums M2 nach dem Abscheiden aus der gasförmigen Phase G des ersten Mediums M1 über eine Leitung 8 zu dem Verdichter zugeführt werden. Die Abscheidevorrichtung 1 gibt die gasförmige Phase L des erste Mediums M1 mit einem verringerten Anteil der flüssigen Phase L des zweiten Mediums M2 vorzugweise 0,05% bis 0,5 % über einen Mediumauslass 9 ab und die gasförmige Phase G des ersten Mediums M1 wird von dort zu einem ersten Wärmeübertrager 4 geleitet und durch eine Wärmeabfuhr gekühlt und/oder verflüssigt. Anschließend wird das erste Medium M1 in einem Expansionsorgan 6 entspannt und zu dem zweiten Wärmeübertrager 5 - auch Verdampfer genannt - geleitet, wobei in dem zweiten Wärmeübertrager 5 die Wärme von dem ersten Medium M1 aufgenommen werden kann.

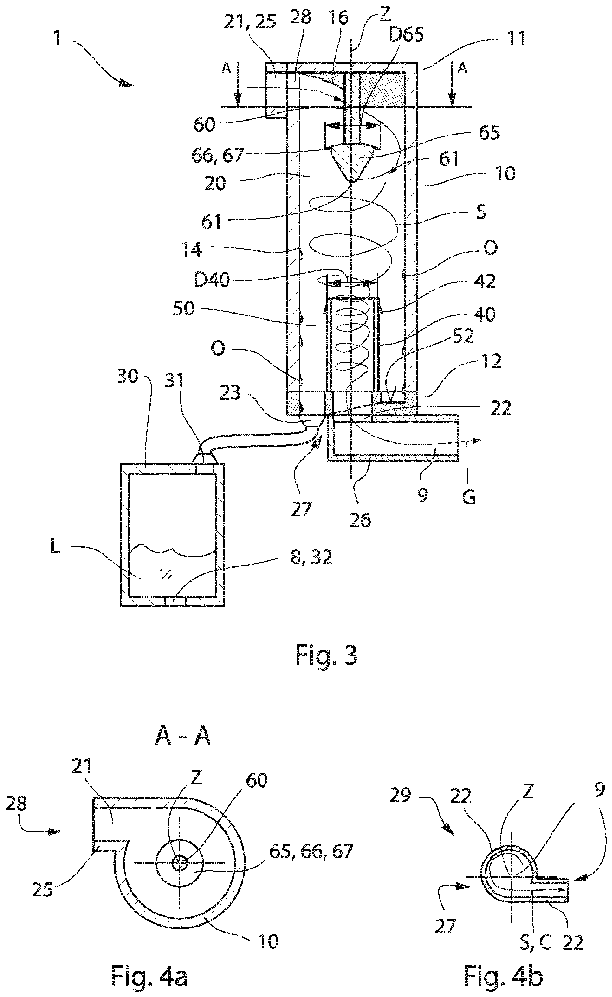

Aus den Figuren 2 und 3 kann ein schematischer und vereinfachter Aufbau einer beispielhaften Ausgestaltung der Abscheidevorrichtung 1, insbesondere der Schmiermittel-Abscheidevorrichtung, entnommen werden.

Die Abscheidevorrichtung 1 zum Abscheiden des zweiten Mediums M2 in einer flüssigen Phase L aus dem Gemisch mit dem ersten Medium M1 in einer gasförmigen Phase G weist ein eine Zyklonkammer 20 ausbildendes Gehäuse 10 auf, welches sich entlang einer Mittelachse Z erstreckt. Die Mittelachse Z entspricht näherungsweise der Symmetrielinie des Gehäuses 10 und der Zyklonkammer 20 und ist bestimmungsgemäß, also in der Einbaulage, im Wesentlichen vertikal orientiert. Das Gehäuse 10 weist einen oberen Endbereich 11 und einen unteren Endbereich 12 auf, wobei die Endbereiche 11, 12 in der Mittelachse Z auf gegenüberliegenden Seiten des Gehäuse 10 liegen.

Unter der im Wesentlichen vertikalen Orientierung der Mittelachse Z kann eine Toleranz von ±20°, weiter bevorzugt ±15°, noch weiter bevorzugt ±10° und am meisten bevorzugt von ±5° in Bezug auf den Kraftvektor der Schwerkraft verstanden werden. Der obere Endbereich 11 liegt somit beim bestimmungsgemäßen Gebrauch der Abscheidevorrichtung 1 in der Mittelachse Z über dem unteren Endbereich 12 und weist eine größere Höhenlage auf als der untere Endbereich 12.

In dem oberen Endbereich 11 und dem unteren Endbereich 12 ist das Gehäuse 10 verschlossen, wobei in dem oberen Endbereich 11 das Gehäuse 10 durch eine Kammerdecke 16 verschlossen ist und in dem unteren Endbereich 12 durch einen Boden 15.

Die Zyklonkammer 20 weist einen Einlass 21, einen ersten Auslass 22 und einen zweiten Auslass 23 auf, wobei durch den Einlass 21, den ersten Auslass 22 und den zweiten Auslass 23 die Zyklonkammer 20 durch das Gehäuse 10 zugänglich ist. Durch den Einlass 21 kann das vom Kältemittelverdichter 2 kommende Gemisch aus der gasförmigen Phase G des ersten Mediums M1 und der flüssigen Phase L des zweiten Mediums M2 in die Zyklonkammer 20 eingebracht werden. Durch den ersten Auslass 22 kann die gasförmige Phase G des ersten Mediums M1 und durch den zweiten Auslass 23 kann die abgeschiedene flüssige Phase L des zweiten Mediums M2 aus der Zyklonkammer 20 bzw. dem Gehäuse 10 abgeführt werden.

Der Einlass 21 ist in dem oberen Endbereich 11 angeordnet und der erste Auslass 22 und der zweite Auslass 23 in dem unteren Endbereich 11. Durch diese Anordnung des Einlasses 21, des ersten Auslasses 22 und des zweiten Auslasses 23 ergibt sich in der Zyklonkammer 20 eine Hauptströmungsrichtung von oben nach unten, also im Wesentlichen in Richtung der Schwerkraft und somit parallel zu der Mittelachse **Z.** Die Abscheidevorrichtung 1 ist somit eine Gleichstrom-Zyklon-Abscheidevorrichtung.

Die Abscheidevorrichtung 1 weist darüber hinaus ein Tauchrohr 40 auf. Das Tauchrohr 40 ragt bevorzugt freistehend in das Gehäuse 10 von dem unteren Endbereich 12 in die Zyklonkammer 20, wobei das Tauchrohr 40 in der Zyklonkammer 20 bevorzugt im Wesentlichen parallel zu der Mittelachse Z angeordnet ist. Mit anderen Worten ist ein freies Ende des Tauchrohrs 40 in der Mittelachse Z beabstandet zu dem Boden 15 angeordnet, wobei bevorzugt das freie Ende in einer Ebene senkrecht zu der Mittelachse Z liegt.

Das Tauchrohr 40 formt zwischen dem Gehäuse 10 und dem Tauchrohr 40 eine Senke 50 aus, wobei die Senke 50 nach oben offen und nach unten - also im unteren Endbereich 12 - durch einen Senkenboden 52 begrenzt bzw. geschlossen ist, der bevorzugt durch den Boden 15 des Gehäuses 10 gebildet werden kann.

Das Gehäuse 10 und das Tauchrohr 40 sind bevorzugt koaxial angeordnet und weiter bevorzugt im Querschnitt rotationssymmetrisch. Ein freies Ende des Tauchrohrs 40 hat einen Außendurchmesser D40.

Das Tauchrohr 40 ist mit dem ersten Auslass 22 verbunden und die Senke 50 mit dem zweiten Auslass 23, wobei die abgeschiedene flüssige Phase L des zweiten Mediums M2 über den Senkenboden 52 bzw. Boden 15 in den zweiten Auslass 23 fließen kann. Wie in den Figuren 1 und 2 dargestellt ist, sind der erste Auslass 22 und der zweite Auslass 23 näherungsweise parallel zu der Mittelachse Z orientiert und führen durch den Boden 15 des Gehäuses 10.

Wie in Figur 3 durch eine gestrichelte Linie angedeutet, kann der Senkenboden 52 eine zum zweiten Auslass 23 orientierte Neigung aufweisen, die ein Ablaufen der abgeschiedenen flüssigen Phase L des zweiten Mediums M2 zum zweiten Auslass 23 über den Senkenboden 52 begünstigt.

Der erste Auslass 23 kann gemäß Figur 4b eine Auslassleitung 26 umfassen, wobei die Auslassleitung 26 mit dem Tauchrohr 40 fluidisch verbunden ist. Die Auslassleitung 26 führt die gasförmige Phase G des ersten Mediums M1 zur weiteren Nutzung, insbesondere in dem Kältekreislauf 3 der Kälteanlage, zu dem Kältemittelauslass 9.

Gemäß der Darstellung in Figur 4b, können zweite Strömungsführungsmittel 29 vorgesehen sein, durch die die von dem Tauchrohr 40 kommende Strömung entdrallt wird bzw. die aus der Zyklonkammer 20 kommende schraubenförmige Strömung in eine, bevorzugt möglichst, axiale Strömung umgelenkt wird. Beispielsweise kann der erste Auslass 22 einen Übergang 27 umfassen, der das Tauchrohr 40 mit der Auslassleitung 26 verbindet, wobei der Übergang 27 als tangentiale bzw. sekantiale Ausleitung ausgeführt ist. Durch die zweiten Strömungsführungsmittel 29 kann der dynamische Druck der aus dem Tauchrohr 40 kommenden stark rotierenden Strömung zurückgewonnen werden. Die Strömung ist nach der tangentialen Ausleitung in der Auslassleitung 26 axial ausgerichtet.

Der zweite Auslass 23 kann einen Sammelbehälter 30 umfassen. Der Sammelbehälter 30 ist vorzugsweise ein druckfester Behälter, der die abgeschiedene flüssige Phase L des zweiten Mediums M2 aufnehmen kann. Die abgeschiedene flüssige Phase L des zweitem Mediums M2 kann durch eine zweite Einlassöffnung 31 in den Sammelbehälter 30 eintreten und sich auf einem Boden des Sammelbehälters 30 sammeln. Zur Entnahme der flüssigen Phase L des zweiten Mediums M2 kann eine Auslassöffnung 32 an einem Bodenbereich des Sammelbehälters 30 vorgesehen sein, durch die beispielsweise die flüssige Phase L des zweiten Medium M2 über die Leitung 8 zum Verdichter zurückgeführt werden kann.

Der Einlass 21 ist in dem oberen Endbereich 11 des Gehäuses 10 angeordnet und mündet bevorzugt - wie Figur 3 entnommen werden kann - bündig an der Kammerdecke 16 in der Zyklonkammer 20. Weiterhin sind in dem oberen Endbereich 11 Strömungsführungsmittel 28 angeordnet, durch welche das durch den Einlass 21 eingebrachte bevorzugt zweiphasige Gemisch aus der gasförmigen Phase G des ersten Mediums M1 und der flüssigen Phase L des zweiten Mediums M2 mit einem Drall zur Bildung eines Zyklons in der Zyklonkammer 20 um die Mittelachse Z versehen wird.

In einer bevorzugten Ausgestaltung der Abscheidevorrichtung 1 mündet der Einlass 21 in dem oberen Endbereich 11 in der Wandung 14, wobei der Einlass 21 gemäß der Figur 4a in Bezug auf die Mittelachse Z versetzt zu der Mittelachse Z angeordnet ist. Demnach ist der Einlass 21 tangential bzw. sekantial an der Zyklonkammer 20 angeordnet und bildet die Strömungsführungsmittel 28, durch die das Gemisch drallbehaftet durch die Wandung 14 in die Zyklonkammer 20 einströmt. Die Strömungsführungsmittel 28 lenken das einströmende Gemisch in eine um die Achse Z rotierende Strömungsbahn um.

Bevorzugt ist der Einlass 21 im Querschnitt im Wesentlichen quadratisch oder polygonförmig und weiterhin bevorzugt derart konfiguriert, dass das einströmende Gemisch tangential und näherungsweise senkrecht zu der Mittelachse Z in die Zyklonkammer 20 einströmt.

Ferner ist unter Bezugnahme auf die begleitenden Figuren 2 und 3 ersichtlich, dass die Kammerdecke 16 Strömungsführungsmittel 28 bildet. Hierfür kann die Kammerdecke 16 des Gehäuses 10 geneigt ausgebildet sein. Die Kammerdecke 16 kann ausgehend von dem Einlass 21 in Richtung des unteren Endbereiches 12 abfallend ausgebildet sein, wobei noch weiter vorteilhaft die Kammerdecke 16 auf der der Zyklonkammer 20 zugewandten Seite nach Art einer Wendel ausgebildet ist und um die Mittelachse Z umlaufend in Richtung des unteren Endbereichs 12 abfallend ausgebildet ist. Die Wendel erstreckt sich jedoch nicht vollständig um die Mittelachse Z, sondern endet in der Umlaufrichtung bevorzugt vor oder bündig zu dem Einlass 21. Die Steigung der Wendel entspricht vorzugsweise annäherungsweise einer Höhe des Einlasses 21. Allerdings kann die Wendel auch durch ein Leitblech oder einen Einsatz in der Zyklonkammer 20 gebildet werden.

Die Strömungsführungsmittel 28 bilden einen Drallerzeuger, der das einströmende Gemisch umlenkt, so dass sich eine schraubenlinienförmige Strömung in der Zyklonkammer 20 um die Mittelachse Z ausbildet, die sich nach unten in Richtung der Schwerkraft bewegt.

Die Abscheidevorrichtung 1 kann ferner einen Kern 60 umfassen, der von dem oberen Endbereich 11 bzw. von der Kammerdecke 16 in der Mittelachse Z orientiert in die Zyklonkammer 20 ragt. Der Kern 60 ist vorzugsweise koaxial zur Mittelachse Z angeordnet und weist ein freies Ende 61 auf, welches bevorzugt freistehend in der Zyklonkammer 20 angeordnet ist. Das freie Ende 61 ist in Bezug auf die Mittelachse Z unterhalb des Einlasses 21 angeordnet und ist weiter bevorzugt zwischen dem Einlass 21 und dem Tauchrohr 40 bzw. dem freien Ende des Tauchrohrs 40 positioniert.

Der Kern 60 ist vorzugsweise stabförmig und weiter bevorzugt rotationssymmetrisch ausgebildet und kann ferner einen Kopf 65 aufweisen, der im Bereich des freien Endes 61 des Kerns 60 angeordnet sein kann.

Der Kopf 65 weist einen Außendurchmesser D65 auf und hat eine größere Querschnittsfläche als der Kern 60. Der Kopf 65 kann eine aerodynamische Form aufweisen, die bevorzugt als torpedoförmig beschrieben werden kann. Demnach weist der Kopf 65 auf der dem unteren Endbereich 12 zugewandten Seite ein zusammenlaufendes Ende auf, wobei das zusammenlaufende Ende entweder kegelförmig ausgestaltet sein kann oder ellipsoid. Weiterhin kann der Kopf 65 bzw. Kern 60 einen Kragen 66 umfassen, wobei der Kragen 66 schirmartig in radialer Richtung absteht. Bevorzugt umfasst der Kopf 65 den Kragen 66, wobei der Kragen 66 auf der dem oberen Endbereich 11 zugewandten Seite des Kopfes 65 angeordnet sein kann. Weiterhin bildet der Kragen 66 eine von dem übrigen Kopf 65 abstehende Abtropfkante 67 aus, die schirmförmig von dem Kern 60 bzw. Kopf 65 absteht und in Richtung des unteren Endbereichs 12 geneigt ist.

Der Kopf 65 und der Kragen 66 sind in der Mittelachse zwischen dem Tauchrohr 40 und dem Einlass 21 angeordnet. Bevorzugt ist der Kopf 65 unterhalb des Einlasses 21 angeordnet. Ein Abstand zwischen dem Einlass 21 und dem Kopf 65 - bezogen auf die Mittelache Z - ist kleiner als ein Abstand zwischen dem Tauchrohr 40 und dem Kopf 65.

Die Querschnittsfläche des Kopfes 65 ist mindestens genauso groß wie eine Querschnittsfläche des Tauchrohres 40; anders ausgedrückt gilt folgendes: D65 ≥ D40. Folglich überdeckt in einer Projektion in der Mittelachse Z der Kopf 65 das freie Ende des Tauchrohrs 40 vollständig.

Der Kern 60 hat die Aufgabe bzw. der Kern 60 ist konfiguriert, das Gemisch in der Zyklonkammer 20 von der Mittelachse Z in radialer Richtung zu verlagern. Dadurch kann die Strömungsgeschwindigkeit in dem Zyklon zunehmen und die Abscheiderate der flüssigen Phase L des zweiten Mediums M2 kann erhöht werden. Trägheitskräfte tragen das gegenüber dem ersten Medium M1 in der gasförmigen Phase G spezifisch schwerere zweite Medium M2 in der flüssigen Phase L an die Wandung 14 und von dort kann die abgeschiedene flüssige Phase L des zweiten Mediums M2 in die Senke 50 ablaufen, wie in den Figuren 3, 8 und 11 symbolisch anhand der Flüssigkeitsnasen dargestellt ist.

Das Tauchrohr 40 ragt bevorzugt in der Mittelachse Z ca. 5 - 35 % einer Gesamthöhe, welche den Abstand zwischen dem Boden 15 und der Kammerdecke 16 beschreibt, in die Zyklonkammer 20 und kann darüber hinaus gemäß den Figuren 3, 8 und 11 einen Tauchrohrkragen 42 aufweisen. Der Tauchrohrkragen 42 umreift das Tauchrohr 40 bzw. umgreift in Form eines Bandes das Tauchrohr 40 bevorzugt vollständig und steht von dem Tauchrohr 40 in die Senke 50 ab. Der Tauchrohrkragen 42 ist weiterhin vorzugsweise in Richtung des unteren Endbereichs 12 geneigt, um eine Abtropfkante zu bilden. Der Tauchrohrkragen 42 kann bevorzugt in der oberen Hälfte, weiter bevorzugt in dem letzten Viertel, des Tauchrohrs 40 innerhalb der Zyklonkammer 20 in der Senke 50 und beabstandet zu dem Senkenboden 52 angeordnet sein. Weiterhin ragt der Tauchrohrkragen 42 vorzugsweise zwischen 5 - 25% einer relativen Kanalhöhe der Senke 50 in die Senke 50.

Der Tauchrohrkragen 42 soll ein Mitreißen der abgeschiedenen flüssigen Phase L des zweiten Mediums M2 durch Rückströmungen in Richtung des oberen Endbereiches 11 entlang des Tauchrohres 40 verhindern. Diese Rückströmungen bilden sich aufgrund einer Druckdifferenz zwischen der Wandung 14 und dem Tauchrohr 40 aus, wobei treibend der höhere Druck an der Wandung 14 in der Senke 50 ist.

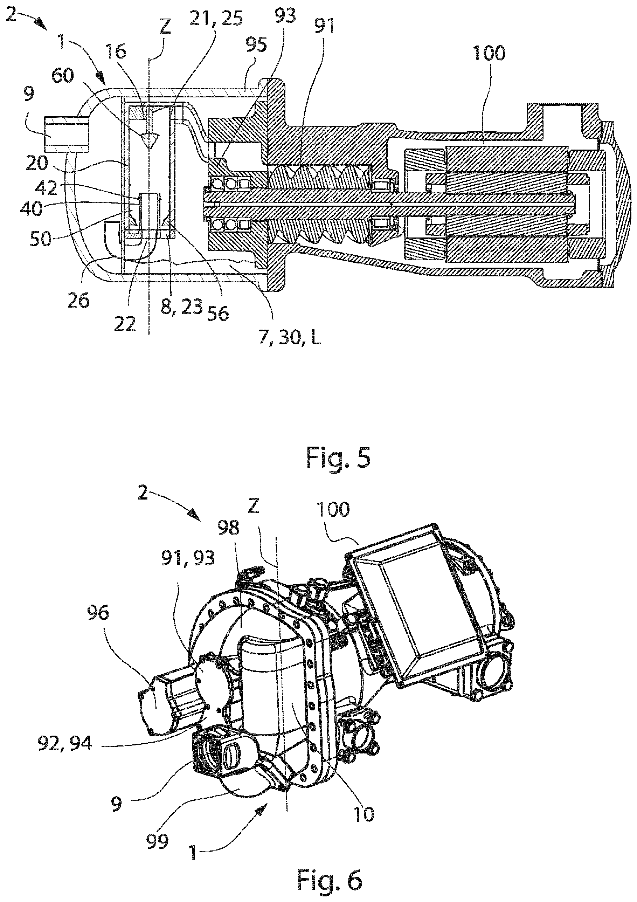

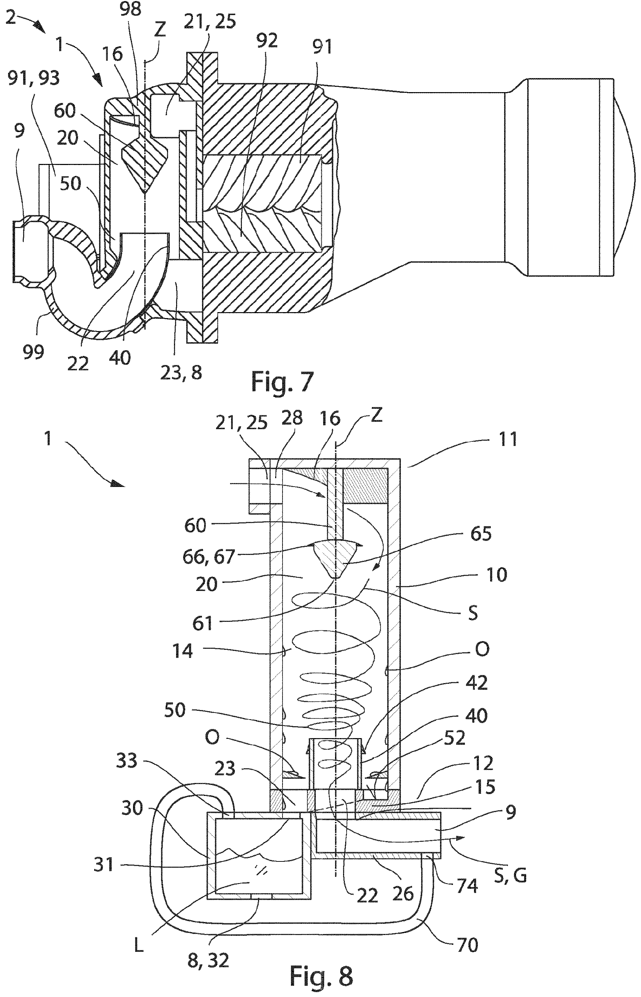

Figuren 5, 6 und 7 zeigen den Verdichter gemäß den Figuren 1 und 2 in unterschiedlichen Ausführungen, wobei der Verdichter als Kältemittelverdichter 2 ausgebildet ist. Die Abscheidevorrichtung 1 ist in dem Verdichter gemäß Figur 5 in einer Druckglocke 95 angeordnet und an dem Verdichter gemäß den Figuren 6 und 7 in einen Gehäusedeckel 98 des Verdichters integriert. Die Abscheidevorrichtung 1 ist in den Figuren 5, 6 und 7 derart an dem Verdichter angeordnet, dass die Mittelachse Z im Wesentlichen vertikal angeordnet ist.

Die Druckglocke 95 kann häufig bei Verdichtern vorgefunden werden, die eine Abscheidevorrichtung mit Drahtgestricken aufweisen. Zum Nachrüsten solcher Verdichter kann die Abscheidevorrichtung mit Drahtgestricken in der Druckglocke 95 durch eine Abscheidevorrichtung 1 ersetzt werden, wodurch der Anteil der flüssigen Phase L des zweiten Mediums M2, insbesondere im Teillastbereich, in der gasförmigen Phase G des ersten Mediums M1 reduziert werden kann. Bei dieser Ausführungsform nimmt die Druckglocke 95 den Hochdruck auf, die Abscheidevorrichtung 1 selbst muss keinen besonderen Druckbelastungen standhalten.

Der Verdichter gemäß Figur 5 kann ein Kältemittelverdichter sein, der als Schraubenkompressor mit einem Läufer 91 oder mehreren Läufern 91, 92 ausgebildet sein kann. Der mindestens eine Läufer 91, 92 wird von einem Antrieb 100 angetrieben und übergibt druckseitig das Gemisch über die Zuführleitung 25 an die Abscheidevorrichtung 1. Die Druckglocke 95 kann durch eine Trennung in zwei Kammern unterteilt sein, wobei in einer der zwei Kammern die Abscheidevorrichtung 1 angeordnet ist. Die zweite Kammer kann mit dem ersten Auslass 22 verbunden sein und kann ferner den Kältemittelauslass 9 aufweisen, durch den das erste Medium M1, bzw. das Kältemedium den Verdichter verlässt.

Der zweite Auslass 23 bildet die Leitung 8 und mündet in einen Sumpf 7 des Verdichters, der den Sammelbehälter 30 bildet bzw. ersetzt. Aus dem Sumpf 7 bedient sich der Verdichter zur Schmierung der Komponenten, wie Beispielsweise der Lager und/oder der Läufer.

Der Verdichter gemäß den Figuren 6 und 7 weist keine Druckglocke 95 auf. Insbesondere anhand der perspektivischen Darstellung gemäß Figur 6 ist ersichtlich, dass an dem Gehäusedeckel 98 in einer Ebene senkrecht zu einer der Läuferachsen der Läufer 91 oder 92 neben den Lagereinrichtungen 93, 94 der Läufer 91, 92 die Abscheidevorrichtung 1 angeordnet ist.

Der Verdichter kann einen oder mehrere Läufer 91, 92 aufweisen, die beliebig angeordnet sein können. Allerdings kann es vorteilhaft sein, wenn die Läufer 91, 92 - wie dargestellt - übereinander angeordnet sind. Die Läuferachsen der Läufer 91, 92 liegen in einer solchen beispielhaften Anordnung in einer gemeinsamen Ebene, die parallel und beabstandet zu der Mittelachse Z der Abscheidevorrichtung 1 angeordnet ist. Weiterhin kann der Verdichter einen Schieber 96 aufweisen, der zur Leistungsregelung verwendet werden kann.

Der Gehäusedeckel 98 kann vorzugweise ein Gussteil sein. Der Gehäusedeckel 98 kann anteilig die Abscheidevorrichtung 1 ausbilden, wie beispielsweise Gehäuse 10 mit Kammerdecke 16, Einlass 21, zweiter Auslass 23, Strömungsführungsmittel 28 und Kern 60. Der erste Auslass 22 und das Tauchrohr 40 können durch ein Gehäusedeckelteil 99 gebildet werden, das an dem Gehäusedeckel 98 befestigbar ist. Wie Figur 7 zeigt, kann das Gehäusedeckelteil 99 den Kältemittelauslass 9 umfassen und kann weiterhin ein Rückschlagventil und/oder ein Absperrventil aufnehmen.

Figur 8 zeigt eine Weiterbildung der Abscheidevorrichtung 1. Die Abscheidevorrichtung 1 weist gegenüber dem bereits beschriebenen Ausführungsbeispiel eine Absaugung für die flüssigen Phase L des zweiten Mediums M2 und eine Drossel in der Senke 50 auf, wobei die Absaugung durch einen Bypass 70 bewerkstelligt werden kann, der den zweiten Auslass 23 mit dem ersten Auslass 21 unter Umgehung der Zyklonkammer 20 verbindet. Durch den Bypass 70 stellt sich eine Strömung der gasförmigen Phase G des ersten Mediums M1 durch den zweiten Auslass 23 ein, durch die die abgeschiedene flüssige Phase L des zweiten Mediums M2 aus der Senke 50 bzw. dem Senkenboden 52 mitgerissen bzw. abgesaugt wird.

Der zweite Auslass 23 umfasst in Analogie zu der in Figur 3 dargestellten Abscheidevorrichtung 1 einen Sammelbehälter 30 mit der Einlassöffnung 31 und einer Auslassöffnung 33 für die gasförmige Phase G des ersten Mediums M1 sowie eine Auslassöffnung 32 für die flüssige Phase L des zweiten Mediums M2. Die Auslassöffnung 33 für die gasförmige Phase G des ersten Mediums M1 ist in dem Sammelbehälter 30 bevorzugt in einem oberen Endbereich derart angeordnet, dass die Auslassöffnung 33 für die gasförmige Phase G des ersten Mediums M1 über einem Pegelstand der in dem Sammelbehälter 30 gesammelten flüssigen Phase L des zweiten Mediums M2 angeordnet ist. Weiterhin sollte der Abstand zwischen der Einlassöffnung 31 und der Auslassöffnung 33 für das erste Medium M1 in der gasförmigen Phase G möglichst groß gewählt sein, um die Verweildauer des mit dem zweiten Mediums M2 in der flüssigen Phase L durch den zweiten Auslass 23 abgeführten ersten Mediums M1 in der gasförmigen Phase G in dem Sammelbehälter 30 zu vergrößern. Weiterhin sollte das Volumen des Sammelbehälters 30 derart gewählt sein, dass eine Verzögerung der Strömung in dem Sammelbehälter 30 erfolgt, wodurch in dem Sammelbehälter 30 weitere Anteile an zweitem Medium M2 in der flüssigen Phase L abgeschieden werden können und der Anteil des zweiten Mediums M2 in der flüssigen Phase L in dem aus der Abscheidevorrichtung 1 ausgegebenen ersten Medium M1 in der gasförmigen Phase G weiter reduziert werden kann.

Der Bypass 70 verbindet die Auslassöffnung 33 für die gasförmige Phase G des ersten Mediums M1 und den ersten Auslass 22 bzw. die Auslassleitung 26. Bevorzugt mündet der Bypass 70 an einem Auslassanschluss 74 in den ersten Auslass 22 außerhalb des Gehäuses 10 bzw. in die Auslassleitung 26. Durch den Bypass 70 fließt bevorzugt ca. 1-10 % des Gesamtmassenstroms des ersten Mediums M1.

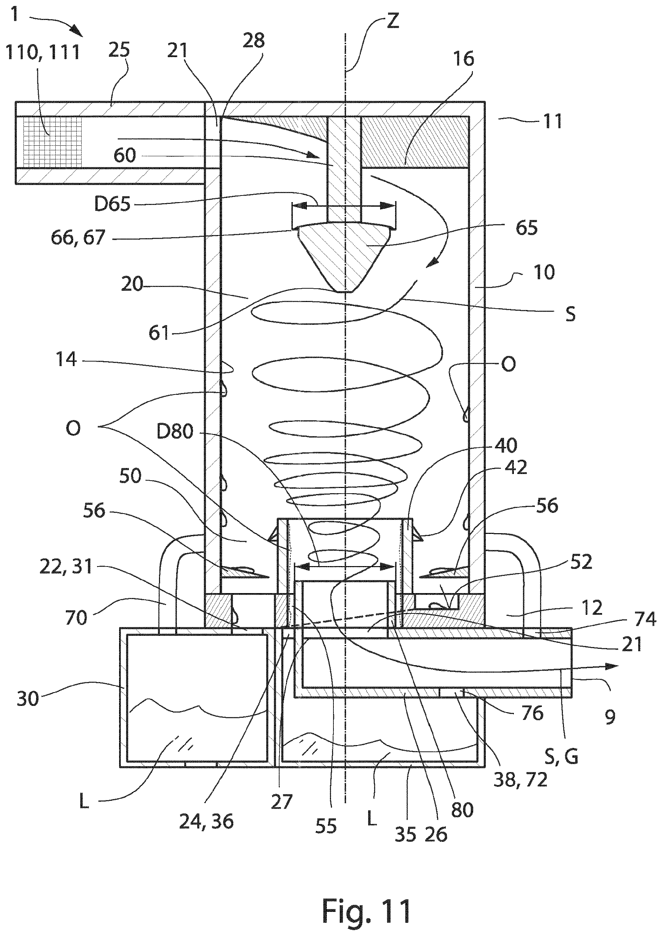

Die Drossel 56, welche insbesondere auch detailliert in der Figur 11 dargestellt ist, ist an der Wandung 14 des Gehäuses 10 angeordnet und ragt in die Senke 50 in Richtung des Tauchrohrs 40. Die Drossel 56 kann keilförmig ausgebildet sein und wie in den Figuren 8 und 11 dargestellt ist, auf der zum oberen Endbereich 11 zugewandten Seite abgeschrägt sein, wodurch die flüssige Phase L des zweiten Mediums M2 in von der zum oberen Endbereich zugewandten Seite ablaufen kann. Dieser Anteil des zweiten Mediums M2 in der flüssigen Phase L ist in den Figuren 8 und 11 durch Flüssigkeitsnasen angedeutet.

Die Drossel 56 ist bevorzugt zwischen dem Tauchrohrkragen 42 und dem unteren Endbereich 12 bzw. dem Senkenboden 52 angeordnet und sperrt vorzugsweise zwischen 25-95 % einer relativen Kanalhöhe der Senke 50. Durch die Drossel 56 wird der Druck auf der dem zweiten Auslass 23 zugewandten Seite in der Senke 50 gesenkt, wodurch die zuvor beschriebenen Rückströmungen erheblich reduziert werden. Gleichzeitig kann die Drossel 56 dafür verwendet werden, den Massenstrom durch den Bypass 70 einzustellen. Allerdings wird an dieser Stelle angemerkt, dass die Drossel 56 unabhängig von dem Bypass 70 in der vorgeschlagenen Abscheidevorrichtung 1 zur Anwendung kommen kann.

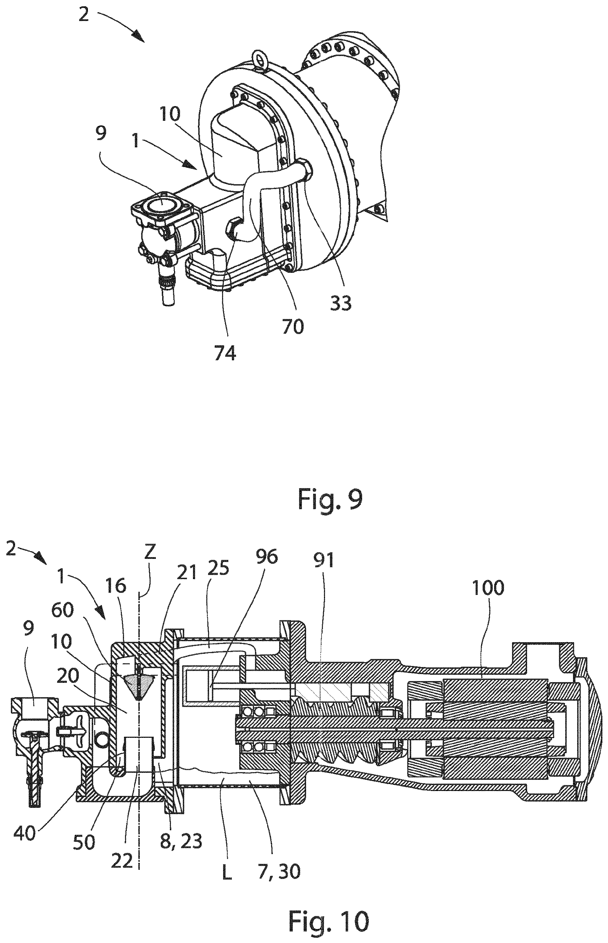

Figuren 9 und 10 zeigen in Analogie zu den Figuren 5 bis 7 die Integration der zuvor beschriebenen Abscheidevorrichtung 1 mit einem Bypass 70 an einen Verdichter, insbesondere als Nachrüstsatz. Der Sumpf 7 des Verdichters wird durch den Sammelbehälter 30 gebildet, wobei der Sumpf 7 über den Bypass 70 mit dem ersten Auslass 22 verbunden ist. Der Sumpf 7 kann bei dem Verdichter auch als Ölsumpf oder Schmiermediumsumpf bezeichnet werden.

Insbesondere der Figur 9 ist zu entnehmen, dass der Bypass 70 durch eine Leitung gebildet ist, die die Zyklonkammer 20 bzw. das die Zyklonkammer 20 bildende Gehäuse 10 umgeht. Somit kann eine Direktverbindung zwischen dem Sammelbehälter 30 und dem ersten Auslass 22 bzw. der Auslassleitung 26 geschaffen werden.

Ein drittes und Ausführungsbeispiel der Abscheidevorrichtung 1 ist der Figur 11 zu entnehmen, wobei dieses dritte Ausführungsbeispiel der Abscheidevorrichtung 1 analog zu dem zweiten Ausführungsbeispiel der Abscheidevorrichtung 1 gemäß den Figuren 8-10 ausgebildet ist und ferner eine zweite Absaugung umfasst, wodurch der Anteil der flüssigen Phase L des zweiten Mediums M2 in der ausgegebenen gasförmigen Phase G des ersten Mediums M1 weiter abgesenkt werden kann. Die zweite Absaugung wird durch ein zweites Tauchrohr 80 bewerkstelligt, welches durch den Boden 15 des Gehäuses 10 in dem unteren Endbereich 12 parallel zu der Mittelachse Z in die Zyklonkammer 20 ragt.

Das zweite Tauchrohr 80 ist innerhalb des Tauchrohrs 40 und vorzugsweise koaxial zu dem Tauchrohr 40 angeordnet und ist in dem Tauchrohr 40 zurückversetzt angeordnet, d.h. das Tauchrohr 40 überragt in der Mittelachse Z in Richtung des oberen Endbereiches 11 das zweite Tauchrohr 80. Das zweite Tauchrohr 80 weist an einem freien Ende einen Durchmesser D80 auf, welcher bevorzugt kleiner ist als der Durchmesser D65 des Kopfes 65.

Zwischen dem zweiten Tauchrohr 80 und dem Tauchrohr 40 ist eine zweite Senke 55 ausgebildet, die analog zu der Senke 50 zwischen dem Tauchrohr 40 und der Wandung 14 des Gehäuses 10 ausgebildet sein kann und einen dritten Auslass 24 aufweist, durch den die abgeschiedene flüssige Phase L des zweiten Mediums M2 aus der zweiten Senke 55 bzw. der Zyklonkammer 20 abgeführt werden kann.

Der dritte Auslass 24 kann einen weiteren Sammelbehälter 35 umfassen, der analog zu dem Sammelbehälter 30 gemäß des ersten und des zweiten Ausführungsbeispiels ausgebildet sein kann. Somit kann der Sammelbehälter 35 eine Einlassöffnung 36 für die flüssige Phase L des zweiten Mediums M2, eine Auslassöffnung 37 für die flüssige Phase L des zweiten Mediums M2 und/oder eine Auslassöffnung 38 für die gasförmige Phase G des ersten Mediums M1 aufweisen. Ein zweiter Bypass 72 kann bevorzugt die Auslassöffnung 38 für die gasförmige Phase G des ersten Mediums M1 mit einem Auslassanschluss 76 an den ersten Auslass 22 verbinden und dort in den ersten Auslass 22 außerhalb des Gehäuses 10 münden.

Der zweite Bypass 72 kann analog zum Bypass 70 ausgebildet sein und verbindet den dritten Auslass 24, insbesondere einen Gasbereich des weiteren Sammelbehälters 35 mit dem ersten Auslass 21, wodurch eine zweite Absaugung gebildet ist.

Die zweite Absaugung mittels des zweiten Tauchrohrs 80 ermöglicht eine weitere Reduzierung des Anteils der flüssigen Phase L des zweiten Mediums M2 in der ausgegebenen gasförmigen Phase G des ersten Mediums M1, da die in das Tauchrohr 40 eintretende Strömung aufgrund der Querschnittverjüngung des Tauchrohrs 40 gegenüber der Zyklonkammer 20 oberhalb des Tauchrohrs 40 erheblich beschleunigt wird. Die abgeschiedene flüssige Phase L des zweiten Mediums M2 ist in Figur 11 durch gestrichelte Linien dargestellt und kann an einer Innenwandung des Tauchrohrs 40 anhaften und in die zweite Senke 55 zum Abführen abfließen.

Das Tauchrohr 40 ist mittelbar über das zweite Tauchrohr 80 mit dem ersten Auslass 22 verbunden.

Strömungstechnisch ist vor der Zyklonkammer 20 eine Tropfenvergrößerungseinrichtung 110 vorgesehen. Die Tropfenvergrößerungseinrichtung 110 soll eine Tropfenverteilung in der flüssigen Phase L des mindestens einen Mediums mit tendenziell größeren Tropfen in dem in die Zyklonkammer 20 einströmenden Gemisch bewirken, weil größere Tropfen in der Zyklonkammer 20 leichter abgeschieden werden können. Durch die geänderte Tropfengrößenverteilung vor dem Einlass 21 kann die Abscheideeffizienz erhöht werden. In dem vorliegenden Ausführungsbespiel gemäß Figur 11 wird die Tropfenvergrößerungseinrichtung 110 durch ein Drahtgestrick 111 bewerkstelligt, wobei die Tropfenvergrößerungseinrichtung 110 beispielsweise und nicht abschließend aufgezählt auch ein poröses Medium, Prallbleche, Prallelemente, eine Zentrifuge, Lamellen, scharfkantige Umlenkungen, Rohrbögen und/oder dergleichen sein kann.

Figur 12 zeigt Weiterbildungen der Kälteanlage gemäß Figur 1. Die Kälteanlage gemäß den Figuren 12 und 13 weist einen Kältekreislauf 3 mit dem als Kältemittelverdichter 2 ausgebildeten Verdichter, zwei Wärmeübertragern 4, 5 und dem Expansionsorgan 6 auf. Ferner weist die Kälteanlage mindestens eine Abscheidevorrichtung 1 auf, die zwischen dem Expansionsorgan 6 und dem als Verdampfer wirkenden Wärmeübertrager 5 angeordnet ist.

Die Abscheidevorrichtung 1 scheidet eine flüssige Phase L aus einem Gemisch mit einer gasförmigen Phase G des Mediums M1, insbesondere des Kältemediums des Kältekreises, ab. Zum besseren Verständnis ist die Abscheidevorrichtung 1, die die flüssige Phase L aus einem Gemisch mit einer gasförmigen Phase G des Mediums M1 abscheidet in den Figuren 12 und 13 mit dem Bezugszeichen "1'" versehen. Im Übrigen entspricht die Abscheidevorrichtung 1' der im Zusammenhang mit den Figuren 1 bis 11 beschrieben Abscheidevorrichtung 1.

In dem Expansionsorgan 6 wird das Medium M1 entspannt und es wird ein Gemisch aus der gasförmigen Phase G und der flüssigen Phase L des Mediums M1 ausgegeben.

Die Abscheidevorrichtung 1' in der Kälteanlage gemäß Figur 12 oder 13 scheidet die flüssige Phase L von der gasförmigen Phase G des Mediums M1 ab und das bereits in der gasförmigen Phase G vorliegende Medium M1 wird, insbesondere von dem ersten Auslass 22, mittels eines Verdampferbeipasses 120 an dem als Verdampfer wirkenden Wärmeübertrager 5 vorbei geleitet und zum Kältemittelverdichter 2 geführt.

Wie Figur 13 entnommen werden kann, kann die Kälteanlage auch mehr als eine Abscheidevorrichtung 1, 1' aufweisen.

Die Kälteanlage gemäß Figur 13 weist zwei Abscheidevorrichtungen 1, 1' auf, wobei die Abscheidevorrichtung 1 eine flüssige Phase L des zweiten Mediums M2 aus einem Gemisch mit einer gasförmigen Phase G des ersten Mediums M1 abscheidet. Die Abscheidevorrichtung 1' ist analog zur Figur 12 zwischen dem Expansionsorgan 6 und dem als Verdampfer wirkenden Wärmeübertrager 5 angeordnet.

Allerdings in der Weiterbildung gemäß Figur 13 wird im Unterschied zu der ersten Weiterbildung der Kältenanlage gemäß Figur 12 die durch die Abscheidevorrichtung 1' abgeschiedene gasförmige Phase G des ersten Mediums M1 nicht an dem als Verdampfer wirkenden Wärmeübertrager 5 vorbeigeleitet. Die gasförmige Phase G des ersten Mediums M1 wird in dem als Verdampfer wirkenden Wärmeübertrager 5 ausgestoßen. Durch das Ausstoßen der gasförmigen Phase G des ersten Mediums M1 in dem als Verdampfer wirkenden Wärmeübertrager 5 kann die Tropfenverteilung auf den Wärmeübertragerrohren beeinflusst werden. Es ist insbesondere bevorzugt, wenn die gasförmige Phase G des ersten Mediums M1 über eine Leitung 124 durch einen Verdampferdeckeneinlass 125 in einem Deckenbereich ausgestoßen wird.

### Bezugszeichenliste

- 1: Abscheidevorrichtung
- 2: Kältemittelverdichter
- 3: Kältekreislauf
- 4: erster Wärmeübertrager
- 5: zweiter Wärmeübertrager
- 6: Expansionsorgan
- 7: Sumpf
- 8: Leitung
- 9: Kältemittelauslass
- 10: Gehäuse
- 11: oberer Endbereich
- 12: unterer Endbereich
- 14: Wandung
- 15: Boden
- 16: Deckel
- 17: Innenseite
- 20: Zyklonkammer
- 21: Einlass
- 22: erster Auslass
- 23: zweiter Auslass
- 24: dritter Auslass
- 25: Zuführleitung
- 26: Auslassleitung
- 27: Übergang
- 28: Strömungsführungsmittel
- 29: zweite Strömungsführungsmittel
- 30: Sammelbehälter
- 31: Einlassöffnung von 30
- 32: Auslassöffnung von 30 für O
- 33: Auslassöffnung von 30 für C
- 35: Sammelbehälter
- 36: Einlassöffnung von 35
- 37: Auslassöffnung von 35 für O
- 38: Auslassöffnung von 35 für C
- 40: Tauchrohr
- 42: Tauchrohrkragen
- 50: Senke
- 52: Senkenboden
- 55: zweite Senke
- 56: Drossel
- 60: Kern
- 61: freies Ende
- 65: Kopf
- 66: Kragen
- 67: Abtropfkante
- 70: Bypass
- 72: zweiter Bypass
- 74: Auslassanschluss
- 80: zweites Tauchrohr
- 91: Läufer
- 92: Läufer
- 93: Lagereinrichtungen
- 94: Lagereinrichtungen
- 95: Druckglocke
- 96: Schieber
- 98: Gehäusedeckel
- 99: Gehäusedeckelteil
- 100: Antrieb
- 110: Tropfenvergrößerungseinrichtung
- 111: Drahtgestrick
- D40: Außendurchmesser des Tauchrohrs
- D65: Außendurchmesser des Kopfes
- D80: Außendurchmesser des zweiten Tauchrohrs
- G: gasförmige Phase
- L: flüssige Phase
- M: Medium
- M1: erstes Medium
- M2: zweites Medium
- S: Strömungspfad
- Z: Mittelachse

## Patentansprüche

1. Abscheidevorrichtung (1), insbesondere Schmiermedium-Abscheidevorrichtung, zum Abscheiden von einer flüssigen Phase (L) aus einem Gemisch mit einer gasförmigen Phase (G) mindestens eines Mediums (M) aufweisend
- ein eine Zyklonkammer (20) ausbildendes Gehäuse (10), welches entlang einer Mittelachse (Z) angeordnet und auf gegenüberliegenden Seiten in Bezug auf die Mittelachse (Z) einen oberen Endbereich (11) und einen unteren Endbereich (12) aufweist,
- ein Tauchrohr (40), und
- Strömungsführungsmittel (28) zur Bildung einer schraubenförmigen Strömung in der Zyklonkammer (20) um die Mittelachse (Z),
- wobei im oberen Endbereich (11) ein Einlass (21) in die Zyklonkammer (20) für das Gemisch und im unteren Endbereich (12) ein erster Auslass (22) für die gasförmige Phase (G) des mindestens einen Mediums (M) und ein zweiter Auslass (23) für die abgeschiedene flüssige Phase (L) des mindestens einen Mediums (M) vorgesehen sind,
- wobei das Tauchrohr (40) von dem unteren Endbereich (12) in der Mittelachse (Z) in die Zyklonkammer (20) ragt und mit dem ersten Auslass (22) fluidisch verbunden ist und zwischen dem Gehäuse (10) und dem Tauchrohr (40) eine erste Senke (50) bildet, und
- wobei die abgeschiedene flüssige Phase (L) des mindestens einen Mediums (M) aus der ersten Senke (50) in dem unteren Endbereich (22) durch den zweiten Auslass (23) abfließen kann,
- wobei ein Kern (60) parallel zu der Mittelachse (Z) von dem oberen Endbereich (11) in die Zyklonkammer (20) ragt
**dadurch gekennzeichnet, dass**
der Kern (60) einen Kopf (65) umfasst, und dass der Kopf (65) in Bezug auf die Mittelachse (Z) auf der dem unteren Endbereich (12) zugewandten Seite des Einlasses (21) angeordnet ist.

2. Abscheidevorrichtung (1) nach Anspruch 1,
**dadurch gekennzeichnet, dass**
die Strömungsführungsmittel (28) durch den Einlass (21) gebildet sind, und dass der Einlass (21) in Bezug auf die Mittelachse (Z) tangential oder sekantial an der Zyklonkammer (20) angeordnet ist.

3. Abscheidevorrichtung (1) nach einem der vorgenannten Ansprüche,
**dadurch gekennzeichnet, dass**
der Einlass (21) das Gemisch im Wesentlichen senkrecht zu der Mittelachse (Z) orientiert in die Zyklonkammer (20) einströmt
und/oder dass der Einlass (21) im Wesentlichen im Querschnitt polygonal oder rechteckig ist
und/oder dass der Einlass (21) Mittel zum Einstellen eines Strömungsquerschnitts aufweist.

4. Abscheidevorrichtung (1) nach einem der Ansprüche 1 -3, **dadurch gekennzeichnet, dass**
eine Querschnittsfläche des Kopfes (65) größer ist als eine Querschnittsfläche des Tauchrohrs (40), welches mit dem ersten Auslass (22) verbunden ist.

5. Abscheidevorrichtung (1) nach einem der Ansprüche 1 - 4,
**dadurch gekennzeichnet, dass**
der Kern (60) mindestens einen Kragen (65) mit einer Abtropfkante (67) umfasst.

6. Abscheidevorrichtung (1) nach einem der Ansprüche 1 - 5,
**dadurch gekennzeichnet, dass**
der Kern (60) schwingfähig ist und/oder zumindest bereichsweise einen schwingfähigen Überzug aufweist.

7. Abscheidevorrichtung (1) nach einem der Ansprüche 1 - 6,
**dadurch gekennzeichnet, dass**
das freie Ende (61) des Kerns (60) kegelförmig ist oder eine an eine Ellipse angenäherte zulaufende Form aufweist.

8. Abscheidevorrichtung (1) nach einem der vorgenannten Ansprüche,
**dadurch gekennzeichnet, dass**
in der Senke (50) mindestens eine Drossel (56) angeordnet ist.

9. Abscheidevorrichtung (1) nach Anspruch 8,
**dadurch gekennzeichnet, dass**
die Drossel (56) von dem Tauchrohr (40) und/oder von dem Gehäuse (10) in die Senke (50) ragt.

10. Abscheidevorrichtung (1) nach einem der vorgenannten Ansprüche,
**dadurch gekennzeichnet, dass**
das Tauchrohr (40) mindestens einen Tauchrohrkragen (42) aufweist.

11. Abscheidevorrichtung (1) nach Anspruch 10,
**dadurch gekennzeichnet, dass**
der Tauchrohrkragen (42) eine schirmförmig abstehende Abtropfkante aufweist.

12. Abscheidevorrichtung (1) nach einem der Ansprüche 10 - 11,
**dadurch gekennzeichnet, dass**
die Drossel (56) in der Längsachse (Z) zwischen dem unteren Endbereich (12) und dem Tauchrohrkragen (42) angeordnet ist.

13. Verdichter, insbesondere Kältemittelverdichter (2), mit einer Abscheidevorrichtung (1) nach einem der vorgenannten Ansprüche.

14. Verdichter nach Anspruch 13,
**dadurch gekennzeichnet, dass**
ein zweiter Sumpf (18), insbesondere in einem Verdichtergehäuse des Verdichters, vorgesehen ist, und dass der zweite Sumpf (18) mit dem zweiten Auslass (23) und/oder dem dritten Auslass (24) der Abscheidevorrichtung (1) verbunden ist.

15. Verdichter nach Anspruch 13 oder 14,
**dadurch gekennzeichnet, dass**
der Verdichter ein Schraubenverdichter mit zwei Läufern (91, 92) ist, wobei die zwei Läufer (91, 92) jeweils in einer Läuferachse angeordnet sind, wobei die Läuferachsen in einer Ebene liegen, die im Wesentlichen parallel und beabstandet zu der Mittelachse (Z) der Abscheidevorrichtung (1) angeordnet ist.

16. Kälteanlage mit mindestens einer Abscheidevorrichtung (1) nach einem der Ansprüche 1 bis 12.

17. Kälteanlage nach Anspruch 16,
**dadurch gekennzeichnet, dass** mindestens ein Expansionsorgan (6) und mindestens ein Wärmeübertrager (4, 5) vorgesehen sind, und dass zwischen dem Expansionsorgan (6) und dem mindestens einen Wärmeübertrager (4, 5) die mindestens eine Abscheidevorrichtung (1) angeordnet ist.

18. Kälteanlage nach Anspruch 17,
**dadurch gekennzeichnet, dass**
die mindestens eine Abscheidevorrichtung (1) mittels eines Verdampferbypasses (120) die gasförmige Phase (G) des mindestens einen Mediums an dem mindestens einen Wärmeübertrager (4, 5) vorbeileitet, der als Verdampfer wirkt.

19. Kälteanlage nach Anspruch 17 oder 18,
**dadurch gekennzeichnet, dass**
die gasförmige Phase (G) des mindestens einen Mediums von der mindestens einen Abscheidevorrichtung (1) in den mindestens einen Wärmeübertrager (4,5), der als Verdampfer wirkt, ausgestoßen wird.

## Claims

1. Separation device (1), in particular a lubricant separation device, for separating a liquid phase (L) from a mixture with a gaseous phase (G) of at least one medium (M), comprising
- a housing (10) forming a cyclone chamber (20), which is arranged along a central axis (Z) and has an upper end region (11) and a lower end region (12) on opposite sides with respect to the central axis (Z),
- an immersion tube (40), and
- flow guide means (28) for forming a helical flow in the cyclone chamber (20) around the central axis (Z),
- wherein an inlet (21) into the cyclone chamber (20) for the mixture is provided in the upper end region (11) and a first outlet (22) for the gaseous phase (G) of the at least one medium (M) and a second outlet (23) for the separated liquid phase (L) of the at least one medium (M) (12) are provided in the lower end region (12),
- wherein the immersion tube (40) protrudes from the lower end region (12) into the cyclone chamber (20) in the central axis (Z) and is fluidically connected to the first outlet (22) and forms a first sink (50) between the housing (10) and the immersion tube (40), and
- wherein the separated liquid phase (L) of the at least one medium (M) can flow out of the first sink (50) in the lower end region (22) through the second outlet (23),
- wherein a core (60) projects into the cyclone chamber (20) from the upper end region (11) parallel to the center axis (Z),
**characterized in that**
the core (60) comprises a head (65), and that the head (65) is arranged relative to the central axis (Z) on the side of the inlet (21) facing the lower end region (12).

2. Separation device (1) according to claim 1,
**characterized in that**
the flow guide means (28) are formed by the inlet (21), and that the inlet (21) is arranged tangentially or secantially to the cyclone chamber (20) with respect to the central axis (Z).

3. Separation device (1) according to any one of the preceding claims,
**characterized in that**
the inlet (21) feeds the mixture into the cyclone chamber (20) oriented substantially perpendicular to the central axis (Z),
and/or that the inlet (21) is essentially polygonal or rectangular in cross-section,
and/or that the inlet (21) comprises means for adjusting a flow cross-section.

4. Separation device (1) according to any one of claims 1-3, **characterized in that**
a cross-sectional area of the head (65) is larger than a cross-sectional area of the immersion tube (40) connected to the first outlet (22).

5. Separation device (1) according to any one of claims 1-4 **characterized in that** the core (60) comprises at least one collar (65) with a drip edge (67).

6. Separation device (1) according to any one of claims 1 to 5,
**characterized in that**
the core (60) is oscillable and/or comprises an oscillable coating at least in some areas.

7. Separation device (1) according to any one of claims 1 to 6,
**characterized in that**
the free end (61) of the core (60) is conical or has a tapered shape approximating an ellipse.

8. Separation device (1) according to any one of the preceding claims,
**characterized in that**
at least one throttle (56) is arranged in the sink (50).

9. Separation device (1) according to claim 8,
**characterized in that**
the throttle (56) protrudes into the sink (50) from the immersion tube (40) and/or from the housing (10).

10. Separation device (1) according to any one of the preceding claims,
**characterized in that**
the immersion tube (40) comprises at least one immersion tube collar (42).

11. Separation device (1) according to claim 10,
**characterized in that**
the immersion tube collar (42) has a drip edge projecting in the shape of a shield.

12. Separation device (1) according to any one of claims 10-11,
**characterized in that**
the throttle (56) is arranged in the longitudinal axis (Z) between the lower end region (12) and the immersion tube collar (42).

13. Compressor, in particular refrigerant compressor (2), comprising a separation device (1) according to any one of the aforementioned claims.

14. Compressor according to claim 13,
**characterized in that**
a second sump (18), in particular in a compressor housing of the compressor, is provided, and that the second sump (18) is connected to the second outlet (23) and/or the third outlet (24) of the separator device (1).

15. Compressor according to claim 13 or 14,
**characterized in that**
the compressor is a screw compressor with two rotors (91, 92), wherein the two rotors (91, 92) are each arranged in a rotor axis, wherein the rotor axes are located in a plane that is arranged substantially parallel and spaced apart from the center axis (Z) of the separation device (1).

16. Refrigeration system with at least one separation device (1) according to any one of claims 1 to 12.

17. Refrigeration system according to claim 16,
**characterized in that**
at least one expansion device (6) and at least one heat exchanger (4, 5) are provided, and that the at least one separation device (1) is arranged between the expansion device (6) and the at least one heat exchanger (4, 5).

18. Refrigeration system according to claim 17,
**characterized in that**
the at least one separation device (1) uses an evaporator bypass (120) to pass the gaseous phase (G) of the at least one medium past the at least one heat exchanger (4, 5), which acts as an evaporator.

19. Refrigeration system according to claim 17 or 18,
**characterized in that**
the gaseous phase (G) of the at least one medium is discharged from the at least one separation device (1) into the at least one heat exchanger (4, 5) which acts as an evaporator.

## Revendications

1. Dispositif (1) de séparation, en particulier dispositif de séparation de milieu lubrifiant, pour la séparation d'une phase (L) liquide dans un mélange comprenant une phase (G) gazeuse d'au moins un milieu (M) comportant
- une enveloppe (10), qui constitue une chambre (20) à cyclone, qui est disposée suivant un axe (Z) médian et qui a, sur des côtés d'extrémité par rapport à l'axe (Z) médian, une partie (11) d'extrémité supérieure et une partie (12) d'extrémité inférieure,
- un tuyau (40) plongeur, et
- des moyens (28) de conduite d'écoulement pour la formation d'un écoulement hélicoïdal dans la chambre (20) à cyclone autour de l'axe (Z) médian,
- dans lequel il est prévu dans la partie (11) d'extrémité supérieure une entrée (21) dans la chambre (20) à cyclone pour le mélange et dans la partie (12) d'extrémité inférieure une première sortie (22) pour la phase (G) gazeuse du au moins un milieu (M) et une deuxième sortie (23) pour la phase (L) liquide séparée du au moins un milieu (M),
- dans lequel le tuyau (40) plongeur pénètre dans l'axe (Z) médian de la partie (12) d'extrémité inférieure dans la chambre (20) à cyclone et communique fluidiquement avec la première sortie (22) et forme un premier puits (50) entre l'enveloppe (10) et le tuyau (40) plongeur, et
- dans lequel la phase (L) liquide séparée du au moins un milieu (M) peut s'écouler du premier puits (50) dans la partie (22) d'extrémité inférieure en passant par la deuxième sortie (23),
- dans lequel un noyau (60) fait saillie parallèlement à l'axe (Z) médian de la partie (11) d'extrémité supérieure dans la chambre (20) à cyclone,
**caractérisé en ce que**
le noyau (60) comprend une tête (65), et **en ce que** la tête (65) est disposée, par rapport à l'axe (Z) médian, du côté de l'entrée (21) tourné vers la partie (12) d'extrémité inférieure.

2. Dispositif (1) de séparation selon la revendication 1, **caractérisé en ce que**
les moyens (28) de conduite d'écoulement sont formés par l'entrée (21), et **en ce que** l'entrée (21) est disposée, par rapport à l'axe (Z) médian, tangentiellement ou de manière sécante à la chambre (20) à cyclone.

3. Dispositif (1) de séparation selon l'une des revendications précédentes,
**caractérisé en ce que**
l'entrée (21) fait entrer le mélange dans la chambre (20) à cyclone en l'orientant sensiblement perpendiculairement à l'axe (Z) médian
et/ou **en ce que** l'entrée (21) est sensiblement polygonale ou rectangulaire en section transversale
et/ou **en ce que** l'entrée (21) a des moyens de réglage d'une section transversale d'écoulement.

4. Dispositif (1) de séparation selon l'une des revendications 1 à 3,
**caractérisé en ce qu'**
une surface de section transversale de la tête (65) est plus grande qu'une surface de section transversale du tuyau (40) plongeur, qui communique avec la première sortie (22).

5. Dispositif (1) de séparation selon l'une des revendications 1 à 4,
**caractérisé en ce que**
le noyau (60) a au moins un collet (65) ayant un bord (67) d'égouttage.

6. Dispositif (1) de séparation selon l'une des revendications 1 à 5,
**caractérisé en ce que**
le noyau (60) est apte à osciller et/ou à un revêtement apte à osciller au moins par endroit.

7. Dispositif (1) de séparation selon l'une des revendications 1 à 6,
**caractérisé en ce que**
l'extrémité (61) libre du noyau (60) est conique ou a une forme se rapprochant d'une ellipse.

8. Dispositif (1) de séparation selon l'une des revendications précédentes,
**caractérisé en ce qu'**
au moins une bobine (56) est disposée dans le puits (50).

9. Dispositif (1) de séparation selon la revendication 8,
**caractérisé en ce que**
la bobine (56) pénètre par le tuyau (40) plongeur et/ou par l'enveloppe (10) dans le puits (50).

10. Dispositif (1) de séparation selon l'une des revendications précédentes,
**caractérisé en ce que**
le tuyau (40) plongeur a au moins un collet (42) de tuyau plongeur.

11. Dispositif (1) de séparation selon la revendication 10, **caractérisé en ce que**
le collet (42) de tuyau plongeur a un bord d'égouttage s'éloignant en forme d'écran.

12. Dispositif (1) de séparation selon l'une des revendications 10 à 11,
**caractérisé en ce que**
la bobine (56) est disposée dans l'axe (Z) longitudinal entre la partie (12) d'extrémité inférieure et le collet (42) de tuyau plongeur.

13. Compresseur, en particulier compresseur (2) d'un agent réfrigérant, comprenant un dispositif (1) de séparation suivant l'une des revendications précédentes.

14. Compresseur selon la revendication 13,
**caractérisé en ce qu'**
il est prévu un deuxième bassin (18), en particulier dans un carter du compresseur, et **en ce que** le deuxième bassin (18) communique avec la deuxième sortie (23) et/ou la troisième sortie (24) du dispositif (1) de séparation.

15. Compresseur selon la revendication 13 ou 14,
**caractérisé en ce que**
le compresseur est un compresseur à vis ayant deux impulseur (91, 92), dans lequel les deux impulseurs (91, 92) sont disposés respectivement suivant un axe d'impulseur, dans lequel les axes d'impulseurs sont dans un plan, qui est sensiblement parallèle et à distance de l'axe (Z) médian du dispositif (1) de séparation.

16. Installation de réfrigération comprenant au moins un dispositif (1) de séparation selon l'une des revendications 1 à 12.

17. Installation de réfrigération selon la revendication 16, **caractérisée en ce qu'**
il est prévu au moins un organe (6) de détente et au moins un échangeur de chaleur (4, 5) et **en ce que** le au moins un dispositif (1) de séparation est monté entre l'organe (6) de détente et le au moins un échangeur de chaleur (4, 5).

18. Installation de réfrigération selon la revendication 17, **caractérisée en ce que**
le au moins un dispositif (1) de séparation conduit, au moyen d'une dérivation (120) d'évaporateur, la phase (G) gazeuse du au moins un milieu au au moins un échangeur de chaleur (4, 5), qui agit en évaporateur.

19. Installation de réfrigération selon la revendication 17 ou 18,
**caractérisée en ce que**
la phase (G) gazeuse du au moins un milieu est expulsée du au moins un dispositif (1) séparateur dans le au moins un échangeur de chaleur (4, 5), qui agit en évaporateur.
